# EUROPEAN PATENT APPLICATION

(11) **EP 4 373 198 A1**
(43) Date of publication of application: **22.05.2024**
(21) Application number: 22855315.2
(22) Date of filing: 04.08.2022
(51) Int. Cl.: H04W 74/00

(54) **COMMUNICATION METHOD AND APPARATUS**

(30) Priority: 09.08.2021 CN 202110909362
(71) Applicant: Huawei Technologies Co., Ltd., Shenzhen, Guangdong 518129 (CN)
(72) Inventor: YUAN, Shitong, Shenzhen, Guangdong 518129 (CN); FAN, Bo, Shenzhen, Guangdong 518129 (CN); ZHANG, Xi, Shenzhen, Guangdong 518129 (CN)
(74) Representative: Maiwald GmbH
(86) International application number: PCT/CN2022/110239
(87) International publication number: WO 2023/016332

(57) **Abstract**

This application discloses a communication method and apparatus. The method includes: A terminal device receives DCI from a first network device, where the DCI includes first information, a preamble, a mask index, an SSB index, and a TCI state index, and there is a correspondence between the first information and a TCI state of a second network device; determines, based on the first information, that a TCI state indicated by the TCI state index is the TCI state of the second network device; and determines a random access resource based on the preamble, the mask index, and the SSB index; and the terminal device sends a random access request message to the second network device based on the random access resource and the TCI state indicated by the TCI state index. According to this solution, communication between a terminal device and a non-serving cell can be implemented.

## Description

### CROSS-REFERENCE TO RELATED APPLICATIONS

This application claims priority to Chinese Patent Application No. 202110909362.2, filed with the China National Intellectual Property Administration on August 9, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a terminal device may perform layer (layer, L) 1 measurement and reporting for a non-serving cell. For example, the terminal device measures, based on a physical measurement mechanism, a signal sent by the non-serving cell, and reports a measurement result (for example, receive power obtained through reference signal L1 measurement). Under this trend, a serving cell may switch from an active transmission configuration indicator (transmission configuration indicator, TCI) state to a TCI state of a non-serving cell by delivering downlink control information (downlink control information, DCI) to the terminal device, so that the terminal device can communicate with the non-serving cell. However, how to implement communication between a terminal device and a non-serving cell is a problem that needs to be resolved.

### SUMMARY

Embodiments of this application provide a communication method and apparatus, to implement communication between a terminal device and a non-serving cell.

According to a first aspect, this application provides a communication method. The method may be performed by a terminal device or a component of the terminal device. The method includes: The terminal device receives downlink control information DCI from a first network device, where the DCI includes first information, a preamble, a mask index, a synchronization signal block SSB index, and a transmission configuration indicator TCI state index, and there is a correspondence between the first information and a transmission configuration indicator TCI state of a second network device; the terminal device determines, based on the first information, that a TCI state indicated by the TCI state index is the TCI state of the second network device; the terminal device determines a random access resource based on the preamble, the mask index, and the SSB index; and the terminal device sends a random access request message to the second network device based on the random access resource and the TCI state indicated by the TCI state index.

Optionally, the DCI is in DCI format 1_0. The first network device may be a serving cell of the terminal device, and the second network device may be a non-serving cell of the terminal device.

In the foregoing embodiment, the DCI explicitly indicates, by using the first information, that the TCI state indicated by the TCI state index in the DCI is the TCI state of the second network device, so as to implement indication of the TCI state of the second network device by using the DCI. The terminal device may initiate random access to the second network device based on the TCI state indicated by the TCI state index in the DCI and the random access resource determined by using the preamble, the mask index, and the SSB index. In other words, the terminal device can be triggered, based on L1/L2 signaling, to initiate random access to the non-serving cell. Compared with random access initiated by the terminal device based on higher layer signaling (for example, L3 signaling), the random access initiated based on the L1/L2 signaling requires less signaling interaction, so that signaling overheads can be reduced and a random access delay can be shortened. In addition, communication between the terminal device and the non-serving cell can be implemented.

In a possible design, the first information includes at least one of identification information of the second network device or a first preset value, and there is a correspondence between the first preset value and the TCI state of the second network device.

According to the foregoing design, there is a correspondence between the TCI state of the second network device and the identification information of the second network device or the first preset value. In this way, the first network device may add the identification information of the second network device or the first preset value to the DCI, to indicate the TCI state of the second network device. Correspondingly, the terminal device may determine, based on the correspondence of the identification information of the second network device or the first preset value, that the TCI state indicated by the TCI state index in the DCI is the TCI state of the second network device.

In a possible design, a value of the preamble is a second preset value, and the method may further include: The terminal device updates the value of the preamble from the second preset value to a third preset value based on the fact that the TCI state indicated by the TCI state index is the TCI state of the second network device, where there is a correspondence between the third preset value and the TCI state of the second network device.

According to the foregoing design, the DCI may not need to carry the preamble corresponding to the second network device, and the terminal device may determine, based on the relationship between the third preset value and the TCI state of the second network device, the value of the preamble corresponding to the second network device. In this way, complexity of the DCI can be reduced, and a structure of the DCI is simpler. Generally, less information carried in the signaling indicates less network resources consumed for transmitting the signaling. Therefore, in this manner, network resources consumed for transmitting the DCI can be further reduced, and network resource utilization can be improved.

In a possible design, the method further includes: The terminal device receives first configuration information from the first network device, where the first configuration information includes the correspondence between the first preset value and the TCI state of the second network device and the correspondence between the third preset value and the TCI state of the second network device.

According to the foregoing design, the terminal device may obtain the correspondence between the third preset value and the TCI state of the second network device, so that the terminal device can obtain, based on the correspondence and the TCI state of the second network device, the value of the preamble corresponding to the second network device.

In a possible design, the method further includes: The terminal device determines a path loss between the terminal device and the second network device based on transmit power of a reference signal and receive power of the reference signal, where the reference signal is a reference signal in the TCI state of the second network device or an SSB indicated by the SSB index; and the terminal device determines transmit power of the random access request message based on the path loss between the terminal device and the second network device. That the terminal device sends a random access request message to the second network device based on the random access resource and the TCI state indicated by the TCI state index includes: The terminal device sends the random access request message to the second network device at the transmit power based on the random access resource and the TCI state indicated by the TCI state index.

According to the foregoing design, the terminal device may obtain the transmit power for sending the random access request message, and initiate a random access process to the second network device based on the transmit power, the random access resource, and the TCI state indicated by the TCI state index.

In a possible design, the method further includes: The terminal device receives a random access response message from the second network device, where the random access response message includes an uplink timing advance, and the uplink timing advance is used by the terminal device to send uplink information to the second network device.

According to the foregoing design, the terminal device may obtain uplink timing information for communication between the terminal device and the second network device, to implement uplink communication between the terminal device and the non-serving cell.

In a possible design, the method may further include: The terminal device receives higher layer signaling from the first network device, where the higher layer signaling is used for configuring a plurality of TCI states, and the plurality of TCI states include the TCI state of the second network device. Further, the method may further include: The terminal device receives Media Access Control control element MAC-CE signaling from the first network device, where the MAC-CE signaling is used for activating one or more of the plurality of TCI states, and the one or more activated TCI states include the TCI state of the second network device.

According to the foregoing design, the first network device may configure the TCI state of the second network device for the terminal device by using the higher layer signaling, and activate the TCI state of the second network device by using the MAC-CE signaling.

In a possible design, the method may further include: The terminal device sends feedback information to the first network device, where the feedback information indicates that the terminal device successfully receives the DCI.

According to the foregoing design, the first network device may determine, based on the feedback information, that the terminal device has successfully received the DCI.

According to a second aspect, this application provides a communication method. The method may be performed by a terminal device or a component of the terminal device. The method includes: The terminal device receives downlink control information DCI from a first network device, where the DCI includes a preamble, a mask index, a synchronization signal block SSB index, and a transmission configuration indicator TCI state index, and values of the preamble and the mask index indicate that an SSB indicated by the SSB index is an SSB of a second network device; the terminal device determines, based on the fact that the SSB indicated by the SSB index is the SSB of the second network device, that a TCI state indicated by the TCI state index is a TCI state of the second network device, where there is a correspondence between the SSB of the second network device and the TCI state of the second network device; the terminal device determines a random access resource based on the preamble, the mask index, and the SSB index; and the terminal device sends a random access request message to the second network device based on the random access resource and the TCI state indicated by the TCI state index.

Optionally, the DCI is in DCI format 1_0. The first network device may be a serving cell of the terminal device, and the second network device may be a non-serving cell of the terminal device.

In the foregoing embodiment, the DCI implicitly indicates, by using the specific values of the preamble and the mask index, that the TCI state indicated by the TCI state index in the DCI is the TCI state of the cell 102, so as to implement indication of the TCI state of the second network device by using the DCI. The terminal device may initiate random access to the second network device based on the TCI state indicated by the TCI state index in the DCI and the random access resource determined by using the preamble, the mask index, and the SSB index. In other words, the terminal device can be triggered, based on L1/L2 signaling, to initiate random access to the non-serving cell. Compared with random access initiated by the terminal device based on higher layer signaling (for example, L3 signaling), the random access initiated based on the L1/L2 signaling requires less signaling interaction, so that signaling overheads can be reduced and a random access delay can be shortened. In addition, communication between the terminal device and the non-serving cell can be implemented.

In a possible design, the value of the preamble is a second preset value, and the method further includes: The terminal device updates the value of the preamble from the second preset value to a third preset value based on the fact that the TCI state indicated by the TCI state index is the TCI state of the second network device, where there is a correspondence between the third preset value and the TCI state of the second network device.

In a possible design, the method further includes: The terminal device receives second configuration information from the first network device, where the second configuration information includes the correspondence between the SSB of the second network device and the TCI state of the second network device and the correspondence between the third preset value and the TCI state of the second network device.

In a possible design, the method further includes: The terminal device determines a path loss between the terminal device and the second network device based on transmit power of a reference signal and receive power of the reference signal, where the reference signal is a reference signal in the TCI state of the second network device or an SSB indicated by the SSB index; and the terminal device determines transmit power of the random access request message based on the path loss between the terminal device and the second network device. That the terminal device sends a random access request message to the second network device based on the random access resource and the TCI state indicated by the TCI state index includes: The terminal device sends the random access request message to the second network device at the transmit power based on the random access resource and the TCI state indicated by the TCI state index.

In a possible design, the method further includes: The terminal device receives a random access response message from the second network device, where the random access response message includes an uplink timing advance, and the uplink timing advance is used by the terminal device to send uplink information to the second network device.

In a possible design, the method may further include: The terminal device receives higher layer signaling from the first network device, where the higher layer signaling is used for configuring a plurality of TCI states, and the plurality of TCI states include the TCI state of the second network device. Further, the method may further include: The terminal device receives Media Access Control control element MAC-CE signaling from the first network device, where the MAC-CE signaling is used for activating one or more of the plurality of TCI states, and the one or more activated TCI states include the TCI state of the second network device.

In a possible design, the method may further include: The terminal device sends feedback information to the first network device, where the feedback information indicates that the terminal device successfully receives the DCI.

In a possible design, there is an association relationship between a reference signal included in QCL-Type D information in the TCI state indicated by the TCI state index and identification information of the second network device.

According to a third aspect, this application provides a communication method. The method may be performed by a terminal device or a component of the terminal device. The method includes: The terminal device receives downlink control information DCI from a first network device, where the DCI includes a transmission configuration indicator TCI state index and second information, the TCI state index indicates a TCI state of a second network device, and the second information includes at least one of a preamble, a mask index, or a synchronization signal block SSB index; the terminal device determines a random access resource based on the second information; and the terminal device sends a random access request message to the second network device based on the random access resource and the TCI state of the second network device.

Optionally, the DCI is in DCI format 1_1 or DCI format 1_2. The first network device may be a serving cell of the terminal device, and the second network device may be a non-serving cell of the terminal device.

In the foregoing embodiment, the TCI state index in the DCI indicates the TCI state of the second network device, and the second information in the DCI may be used for determining the random access resource, to trigger a random access process between the terminal device and the second network device, so that the terminal device is indicated, based on L1/L2 signaling, to communicate with the non-serving cell in a waveform of the non-serving cell. In addition, the terminal device can be triggered, based on the L1/L2 signaling, to initiate a random access process to the non-serving cell. Compared with random access initiated by the terminal device based on higher layer signaling (for example, L3 signaling), the random access initiated based on the L1/L2 signaling requires less signaling interaction, so that signaling overheads can be reduced and a random access delay can be shortened.

In a possible design, that the terminal device determines a random access resource based on the second information includes: The terminal device determines the random access resource based on the TCI state of the second network device, a first correspondence, and the second information; where
when the second information includes the preamble, the first correspondence includes a correspondence between the mask index and the TCI state of the second network device, and a correspondence between the SSB index and the TCI state of the second network device;
when the second information includes the mask index, the first correspondence includes a correspondence between the preamble and the TCI state of the second network device, and a correspondence between the SSB index and the TCI state of the second network device;
when the second information includes the SSB index, the first correspondence includes a correspondence between the preamble and the TCI state of the second network device, and a correspondence between the mask index and the TCI state of the second network device;
when the second information includes the preamble and the mask index, the first correspondence includes a correspondence between the SSB index and the TCI state of the second network device;
when the second information includes the preamble and the SSB index, the first correspondence includes a correspondence between the mask index and the TCI state of the second network device; or
when the second information includes the mask index and the SSB index, the first correspondence includes a correspondence between the preamble and the TCI state of the second network device.

According to the foregoing design, the terminal device may determine the random access resource based on the TCI state indicated by the TCI state index, the first correspondence, and the second information, to trigger the terminal device to initiate the random access process to the second network device.

In a possible design, the method further includes: The terminal device receives third configuration information from the first network device, where the third configuration information includes the first correspondence.

In a possible design, when the DCI is scrambled by a cell-radio network temporary identifier of the terminal device, the second information is carried in a field that is in the DCI and that is used to carry data scheduling.

According to the foregoing design, the second information may be carried in the field that is in the DCI and that is used to carry data scheduling, so that a reserved field in the DCI does not need to be occupied, and utilization of each field in the DCI can be improved.

In a possible design, the DCI further includes third information, the third information indicates a reference signal, and the method further includes: The terminal device determines a path loss between the terminal device and the second network device based on transmit power of the reference signal and receive power of the reference signal; and the terminal device determines transmit power of the random access request message based on the path loss between the terminal device and the second network device. That the terminal device sends a random access request message to the second network device based on the random access resource and the TCI state of the second network device includes: The terminal device sends the random access request message to the second network device at the transmit power based on the random access resource and the TCI state of the second network device.

In a possible design, the method further includes: The terminal device receives a random access response message from the second network device, where the random access response message includes an uplink timing advance, and the uplink timing advance is used by the terminal device to send uplink information to the second network device.

In a possible design, the method may further include: The terminal device receives higher layer signaling from the first network device, where the higher layer signaling is used for configuring a plurality of TCI states, and the plurality of TCI states include the TCI state of the second network device. Further, the method may further include: The terminal device receives Media Access Control control element MAC-CE signaling from the first network device, where the MAC-CE signaling is used for activating one or more of the plurality of TCI states, and the one or more activated TCI states include the TCI state of the second network device.

In a possible design, the method may further include: The terminal device sends feedback information to the first network device, where the feedback information indicates that the terminal device successfully receives the DCI.

According to a fourth aspect, this application provides a communication method. The method may be performed by a terminal device or a component of the terminal device. The method includes: A terminal device receives a first message from a first network device, where the first message includes handover indication information and identification information of a second network device, and the handover indication information is used to indicate the terminal device to perform cell handover; and the terminal device hands over from the first network device to the second network device based on the first message.

Optionally, the first network device may be a serving cell of the terminal device, and the second network device may be a non-serving cell of the terminal device. Optionally, the first message may be DCI or MAC-CE signaling.

In a possible design, the first message further includes timing indication information and a transmission configuration indicator TCI state index, the timing indication information indicates a timing used when the terminal device communicates with the second network device, and a TCI state indicated by the TCI state index is a TCI state of the second network device. That the terminal device hands over from the first network device to the second network device based on the first message may be: The terminal device performs beam switching based on the TCI state indicated by the TCI state index, and communicates with the second network device based on the timing indicated by the timing indication information.

In a possible design, the first message further includes a transmission configuration indicator TCI state index and second information, and the second information includes at least one of a preamble, a mask index, or a synchronization signal block SSB index. That the terminal device hands over from the first network device to the second network device based on the first message may be: The terminal device determines a random access resource based on the handover indication information and the second information; and the terminal device sends a random access request message to the second network device based on the random access resource and a TCI state indicated by the TCI state index.

In a possible design, the first message further includes a transmission configuration indicator TCI state index, and a TCI state indicated by the TCI state index is a TCI state of the second network device. That the terminal device hands over from the first network device to the second network device based on the first message may be: The terminal device determines a random access resource based on the handover indication information and preset configuration information, where the preset configuration information includes at least one of a preamble, a mask index, or a synchronization signal block SSB index; and the terminal device sends a random access request message to the second network device based on the random access resource and the TCI state indicated by the TCI state index.

In a possible design, the method further includes: The terminal device receives a random access response message from the second network device, where the random access response message includes an uplink timing advance, and the uplink timing advance is used by the terminal device to send uplink information to the second network device.

In a possible design, the method may further include: The terminal device receives higher layer signaling from the first network device, where the higher layer signaling is used for configuring a plurality of TCI states, and the plurality of TCI states include the TCI state of the second network device. Further, the method may further include: The terminal device receives Media Access Control control element MAC-CE signaling from the first network device, where the MAC-CE signaling is used for activating one or more of the plurality of TCI states, and the one or more activated TCI states include the TCI state of the second network device.

In a possible design, the method may further include: The terminal device sends feedback information to the first network device, where the feedback information indicates that the terminal device successfully receives the first message.

According to a fifth aspect, this application provides a communication method. The method may be performed by a terminal device or a component of the terminal device. The method includes: The terminal device receives a first message from a first network device, where the first message includes timing indication information, a transmission configuration indicator TCI state index, and identification information of a second network device, and the timing indication information indicates a timing used when the terminal device communicates with the second network device; and the terminal device performs beam switching based on a TCI state indicated by the TCI state index, and communicates with the second network device based on the timing indicated by the timing indication information.

Optionally, the first network device may be a serving cell of the terminal device, and the second network device may be a non-serving cell of the terminal device. Optionally, the first message may be DCI or MAC-CE signaling.

In a possible design, the method may further include: The terminal device sends feedback information to the first network device, where the feedback information indicates that the terminal device successfully receives the first message.

According to a sixth aspect, this application provides a communication method. The method may be performed by a terminal device or a component of the terminal device. The method includes: A terminal device receives a sounding reference signal SRS resource of a second network device, where a first network device is a network device on which the terminal device camps; the terminal device sends one or more SRSs to the second network device based on the SRS resource, where each of the plurality of SRSs is carried in a different beam; the terminal device receives DCI from the first network device, where the DCI indicates a TCI state, and a beam indicated by the TCI state is used for downlink communication between the terminal device and the second network device; and the terminal device receives scheduling information from the second network device based on the beam indicated by the TCI state, where the scheduling information includes uplink timing information of the second network device, and the uplink timing information includes at least one of an uplink timing advance or an uplink timing advance offset.

Optionally, the first network device may be a serving cell of the terminal device, and the second network device may be a non-serving cell of the terminal device.

In the foregoing embodiment, the terminal device sends the one or more SRSs to the second network device, to assist the second network device in determining the uplink timing advance or the uplink timing advance offset, and cell handover does not need to be performed. That is, before L1/L2 handover, the terminal device may obtain the uplink timing advance or the uplink timing advance offset between the terminal device and the terminal device, so that a delay in a random access process can be saved, and the terminal device can communicate with the non-serving cell by using a beam of the non-serving cell.

In a possible design, that the terminal device sends one or more SRSs to the second network device based on the SRS resource includes: The terminal device sends the one or more SRSs to the second network device based on uplink timing information for communicating with the first network device.

In a possible design, the method further includes: The terminal device receives a downlink reference signal from the second network device; the terminal device measures the downlink reference signal to obtain a measurement result, where the measurement result includes a downlink timing difference between the terminal device and the second network device, and the measurement result is used by the second network device to determine whether to configure the SRS resource; and the terminal device sends the measurement result to the first network device.

In a possible design, the method further includes: The terminal device determines a path loss between the terminal device and the second network device based on transmit power of the downlink reference signal and receive power of the downlink reference signal; and the terminal device determines transmit power of the one or more SRSs based on the path loss.

In a possible design, the method may further include: The terminal device sends feedback information to the first network device, where the feedback information indicates that the terminal device successfully receives the DCI.

According to a seventh aspect, this application provides a communication method. The method may be performed by a terminal device or a component of the terminal device. The method includes: The terminal device receives RRC signaling from a first network device, where the RRC signaling is used for configuring a plurality of TCI states, the plurality of TCI states include a TCI state used to determine uplink timing information, and the uplink timing information includes an uplink timing advance or an uplink timing advance offset for communication between the terminal device and a second network device; the terminal device receives MAC-CE signaling from the first network device, where the MAC-CE signaling is used to activate one or more TCI states, and the one or more activated TCI states include the TCI state used to determine the uplink timing information; the terminal device receives DCI from the first network device, where the DCI indicates the TCI state used to determine the uplink timing information; and the terminal device sends uplink information to the second network device based on the uplink timing information.

Optionally, the first network device may be a serving cell of the terminal device, and the second network device may be a non-serving cell of the terminal device.

In the foregoing embodiment, the uplink timing information is determined by the non-serving cell, and the non-serving cell sends the uplink timing information to the serving cell of the terminal device. In this way, the serving cell may send the uplink timing information to the terminal device by using a TCI configuration, without changing a TCI configuration procedure or performing cell handover. That is, before L1/L2 handover, the terminal device may obtain the uplink timing information between the terminal device and the non-serving cell, so that a delay of a random access process can be saved, and the terminal device can communicate with the non-serving cell by using a beam of the non-serving cell.

In a possible design, the TCI state includes the uplink timing information, or there is a correspondence between an identifier of the TCI state and the uplink timing information.

In a possible design, the method may further include: The terminal device sends feedback information to the first network device, where the feedback information indicates that the terminal device successfully receives the DCI.

According to an eighth aspect, this application provides a communication method. The method may be performed by a first network device or a component of the first network device. The method includes: The first network device generates downlink control information DCI, where the DCI includes first information, a preamble, a mask index, a synchronization signal block SSB index, and a transmission configuration indicator TCI state index, and there is a correspondence between the first information and a transmission configuration indicator TCI state of a second network device; and the first network device sends the DCI to a terminal device.

In a possible design, the method further includes: The first network device sends first configuration information to the terminal device, where the first configuration information includes a correspondence between the first preset value and the TCI state of the second network device, and a correspondence between a third preset value and the TCI state of the second network device, and the third preset value is used to update the preamble.

In a possible design, the method may further include: The first network device receives feedback information from the terminal device, where the feedback information indicates that the terminal device successfully receives the DCI.

According to a ninth aspect, this application provides a communication method. The method may be performed by a first network device or a component of the first network device. The method includes: The first network device generates downlink control information DCI, where the DCI includes a preamble, a mask index, a synchronization signal block SSB index, and a transmission configuration indicator TCI state index, and values of the preamble and the mask index indicate that an SSB indicated by the SSB index is an SSB of a second network device; and the first network device sends the DCI to a terminal device.

In a possible design, the method further includes: The first network device sends second configuration information to the terminal device, where the second configuration information includes a correspondence between the SSB of the second network device and a TCI state of the second network device, and a correspondence between a third preset value and the TCI state of the second network device, and the third preset value is used to update the preamble.

In a possible design, the method may further include: The first network device receives feedback information from the terminal device, where the feedback information indicates that the terminal device successfully receives the DCI.

In a possible design, there is an association relationship between a reference signal included in QCL-Type D information in the TCI state indicated by the TCI state index and identification information of the second network device.

According to a tenth aspect, this application provides a communication method. The method may be performed by a first network device or a component of the first network device. The method includes: The first network device generates downlink control information DCI, where the DCI includes a transmission configuration indicator TCI state index and second information, the TCI state index indicates a TCI state of a second network device, and the second information includes at least one of a preamble, a mask index, or a synchronization signal block SSB index; and the first network device sends the DCI to a terminal device.

In a possible design, the method further includes: The first network device sends third configuration information to the terminal device, where the third configuration information includes a first correspondence; where
when the second information includes the preamble, the first correspondence includes a correspondence between the mask index and the TCI state of the second network device, and a correspondence between the SSB index and the TCI state of the second network device;
when the second information includes the mask index, the first correspondence includes a correspondence between the preamble and the TCI state of the second network device, and a correspondence between the SSB index and the TCI state of the second network device;
when the second information includes the SSB index, the first correspondence includes a correspondence between the preamble and the TCI state of the second network device, and a correspondence between the mask index and the TCI state of the second network device;
when the second information includes the preamble and the mask index, the first correspondence includes a correspondence between the SSB index and the TCI state of the second network device;
when the second information includes the preamble and the SSB index, the first correspondence includes a correspondence between the mask index and the TCI state of the second network device; or
when the second information includes the mask index and the SSB index, the first correspondence includes a correspondence between the preamble and the TCI state of the second network device.

In a possible design, the method further includes: The first network device sends higher layer signaling to the terminal device, where the higher layer signaling is used for configuring a plurality of TCI states, and the plurality of TCI states include the TCI state of the second network device.

In a possible design, the method further includes: The first network device sends Media Access Control control element MAC-CE signaling to the terminal device, where the MAC-CE signaling is used for activating one or more of the plurality of TCI states, and the one or more activated TCI states include the TCI state of the second network device.

In a possible design, the method may further include: The first network device receives feedback information from the terminal device, where the feedback information indicates that the terminal device successfully receives the DCI.

According to an eleventh aspect, this application provides a communication method. The method may be performed by a first network device or a component of the first network device. The method includes: The first network device generates a first message, where the first message includes handover indication information and identification information of a second network device, and the handover indication information is used to indicate a terminal device to perform cell handover; and the first network device sends the first message to the terminal device.

In a possible design, the first message further includes timing indication information and a transmission configuration indicator TCI state index, the timing indication information indicates a timing used when the terminal device communicates with the second network device, and a TCI state indicated by the TCI state index is a TCI state of the second network device.

In a possible design, the first message further includes a transmission configuration indicator TCI state index and second information, and the second information includes at least one of a preamble, a mask index, or a synchronization signal block SSB index.

In a possible design, the first message further includes a transmission configuration indicator TCI state index, and a TCI state indicated by the TCI state index is a TCI state of the second network device.

In a possible design, the method may further include: The first network device receives feedback information from the terminal device, where the feedback information indicates that the terminal device successfully receives the first message.

According to a twelfth aspect, this application provides a communication method. The method may be performed by a first network device or a component of the first network device. The method includes: The first network device generates a first message, where the first message includes timing indication information, a transmission configuration indicator TCI state index, and identification information of a second network device, and the timing indication information indicates a timing used when a terminal device communicates with the second network device; and the first network device sends the first message to the terminal device.

In a possible design, the method may further include: The first network device receives feedback information from the terminal device, where the feedback information indicates that the terminal device successfully receives the first message.

According to a thirteenth aspect, this application provides a communication method. The method may be performed by a first network device or a component of the first network device. The method includes: The first network device receives an acknowledgment message from a second network device, where the acknowledgment message indicates that the second network device successfully obtains uplink timing information between the second network device and a terminal device, and the uplink timing information includes at least one of an uplink timing advance or an uplink timing advance offset; and the first network device sends DCI to the terminal device, where the DCI indicates a TCI state, and a beam indicated by the TCI state is used for downlink communication between the terminal device and the second network device.

In a possible design, the method further includes: The first network device receives a measurement result from the terminal device; and the first network device sends indication information to the second network device based on the measurement result, where the indication information indicates the second network device to configure an SRS resource for the terminal device.

In a possible design, the method may further include: The first network device receives feedback information from the terminal device, where the feedback information indicates that the terminal device successfully receives the DCI.

According to a fourteenth aspect, this application provides a communication method. The method may be performed by a first network device or a component of the first network device. The method includes: The first network device receives uplink timing information from a second network device, where the uplink timing information is used for communication between the second network device and a terminal device; and the first network device sends RRC signaling to the terminal device, where the RRC signaling is used for configuring a plurality of TCI states, and the plurality of TCI states include a TCI state used for determining the uplink timing information; the first network device sends MAC-CE signaling to the terminal device, where the MAC-CE signaling is used for activating one or more TCI states, and the one or more activated TCI states include the TCI state used for determining the uplink timing information; and the first network device sends DCI to the terminal device, where the DCI indicates the TCI state used for determining the uplink timing information.

In a possible design, the TCI state includes the uplink timing information, or there is a correspondence between an identifier of the TCI state and the uplink timing information.

In a possible design, the method may further include: The first network device receives feedback information from the terminal device, where the feedback information indicates that the terminal device successfully receives the DCI.

According to a fifteenth aspect, this application provides a communication method. The method may be performed by a second network device or a component of the second network device. The method includes: The second network device sends an SRS resource to a terminal device; the second network device receives one or more SRSs from the terminal device based on the SRS resource, where each of the plurality of SRSs is carried in a different beam; the second network device measures the one or more SRSs to obtain uplink timing information, where the uplink timing information includes at least one of an uplink timing advance or an uplink timing advance offset; and the second network device sends scheduling information to the terminal device, where the scheduling information includes the uplink timing information.

In a possible design, the second network device receives indication information from a first network device, where the indication information indicates the second network device to configure an SRS resource for the terminal device.

In a possible design, the second network device sends an acknowledgment message to the first network device, where the acknowledgment message indicates that the second network device successfully obtains the uplink timing information.

According to a sixteenth aspect, this application provides a communication method. The method may be performed by a second network device or a component of the second network device. The method includes: The second network device determines uplink timing information, where the uplink timing information includes at least one of an uplink timing advance or an uplink timing advance offset; and the second network device sends the uplink timing information to a first network device.

According to a seventeenth aspect, this application provides a communication apparatus. The communication apparatus may be the foregoing terminal device, the foregoing first network device, the foregoing second network device, or a chip disposed in a terminal device or a network device (the first network device or the second network device). For example, the communication apparatus may be configured to implement the methods in the first aspect to the seventh aspect and the possible designs of the first aspect to the seventh aspect; or implement the methods in the eighth aspect to the fourteenth aspect and the possible designs of the eighth aspect to the fourteenth aspect; or implement the methods in the fifteenth aspect and the sixteenth aspect and the possible designs of the fifteenth aspect and the sixteenth aspect.

The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

According to an eighteenth aspect, this application provides a communication apparatus, including a transceiver unit. Optionally, the communication apparatus further includes a processing unit. The communication apparatus may be configured to implement the methods in the first aspect to the seventh aspect and the possible designs of the first aspect to the seventh aspect; or implement the methods in the eighth aspect to the fourteenth aspect and the possible designs of the eighth aspect to the fourteenth aspect; or implement the methods in the fifteenth aspect and the sixteenth aspect and the possible designs of the fifteenth aspect and the sixteenth aspect.

According to a nineteenth aspect, this application provides a communication apparatus, including a processor. The processor is coupled to the memory, and may be configured to execute instructions in the memory, to enable the apparatus to perform the methods in the first aspect to the seventh aspect and the possible designs of the first aspect to the seventh aspect; or perform the methods in the eighth aspect to the fourteenth aspect and the possible designs of the eighth aspect to the fourteenth aspect; or perform the methods in the fifteenth aspect and the sixteenth aspect and the possible designs of the fifteenth aspect and the sixteenth aspect. Optionally, the apparatus further includes the memory. Optionally, the apparatus further includes an interface circuit, and the processor is coupled to the interface circuit.

The interface circuit may be a code/data read/write interface circuit, and the interface circuit is configured to: receive computer-executable instructions (the computer-executable instructions are stored in the memory, and may be directly read from the memory, or may pass through another component), and transmit the computer-executable instructions to the processor, so that the processor runs the computer-executable instruction to perform the method according to any one of the foregoing aspects.

In some possible designs, the communication apparatus may be a chip or a chip system.

According to a twentieth aspect, this application provides a communication apparatus, including a processor and a memory. The processor is configured to: read instructions stored in the memory, receive a signal by using a receiver, and transmit a signal by using a transmitter, to perform the methods in the first aspect to the seventh aspect and the possible designs of the first aspect to the seventh aspect; or perform the methods in the eighth aspect to the fourteenth aspect and the possible designs of the eighth aspect to the fourteenth aspect; or perform the methods in the fifteenth aspect and the sixteenth aspect and the possible designs of the fifteenth aspect and the sixteenth aspect.

Optionally, there are one or more processors, and there are one or more memories.

Optionally, the memory may be integrated with the processor, or the memory and the processor are disposed separately.

In a specific implementation process, the memory may be a non-transitory (non-transitory) memory, such as a read-only memory (read only memory, ROM). The memory and the processor may be integrated into one chip, or may be separately disposed in different chips. A type of the memory and a manner in which the memory and the processor are disposed are not limited in this embodiment of this application.

The communication apparatus may be a chip, and the processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to a twenty-first aspect, this application provides a processor, including an input circuit, an output circuit, and a processing circuit. The processing circuit is configured to receive a signal through the input circuit, and transmit a signal through the output circuit, to enable the processor to perform the methods in the first aspect to the seventh aspect and the possible designs of the first aspect to the seventh aspect; or perform the methods in the eighth aspect to the fourteenth aspect and the possible designs of the eighth aspect to the fourteenth aspect; or perform the methods in the fifteenth aspect and the sixteenth aspect and the possible designs of the fifteenth aspect and the sixteenth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twenty-second aspect, this application provides a communication apparatus, including a logic circuit and an input/output interface. The input/output interface is configured to communicate with a module outside the communication apparatus, and the logic circuit is configured to run a computer program to perform the method in any one of the foregoing aspects. The communication apparatus may be the terminal device in the first aspect to the seventh aspect and the possible designs of the first aspect to the seventh aspect, or the first network device in the eighth aspect to the fourteenth aspect and the possible designs of the eighth aspect to the fourteenth aspect, or the second network device in the fifteenth aspect and the sixteenth aspect and the possible designs of the fifteenth aspect and the sixteenth aspect.

Alternatively, the input/output interface may be a code/data read/write interface circuit, and the input/output interface is configured to: receive a computer program (the computer program is stored in a memory, and may be directly read from the memory, or may be read through another component), and transmit the computer program to the input/output interface, so that the input/output interface runs the computer program to perform the method according to any one of the foregoing aspects.

Optionally, the communication apparatus may be a chip.

According to a twenty-third aspect, this application provides a computer program product. The computer program product includes a computer program (which may also be referred to as code or an instruction), and when the computer program is run, a computer is enabled to perform the methods in the first aspect to the seventh aspect and the possible designs of the first aspect to the seventh aspect, or perform the methods in the eighth aspect to the fourteenth aspect and the possible designs of the eighth aspect to the fourteenth aspect, or perform the methods in the fifteenth aspect and the sixteenth aspect and the possible designs of the fifteenth aspect and the sixteenth aspect.

According to a twenty-fourth aspect, this application provides a computer-readable medium. The computer-readable medium stores a computer program (which may also be referred to as code or an instruction). When the computer program runs on a computer, the computer is enabled to perform the methods in the first aspect to the seventh aspect and the possible designs of the first aspect to the seventh aspect, or perform the methods in the eighth aspect to the fourteenth aspect and the possible designs of the eighth aspect to the fourteenth aspect, or perform the methods in the fifteenth aspect and the sixteenth aspect and the possible designs of the fifteenth aspect and the sixteenth aspect.

According to a twenty-fifth aspect, this application provides a chip system. The chip system includes a processor and an interface, and is configured to support a communication apparatus in implementing the functions in the first aspect or the second aspect, the functions in the first aspect to the seventh aspect and the possible designs of the first aspect to the seventh aspect, or the functions in the eighth aspect to the fourteenth aspect and the possible designs of the eighth aspect to the fourteenth aspect, or the functions in the fifteenth aspect and the sixteenth aspect and the possible designs of the fifteenth aspect and the sixteenth aspect. In a possible design, the chip system further includes a memory. The memory is configured to store necessary information and data of the foregoing communication apparatus. The chip system may include a chip, or may include a chip and another discrete component.

According to a twenty-sixth aspect, this application provides a functional entity. The functional entity is configured to implement the methods in the first aspect to the seventh aspect and the possible designs of the first aspect to the seventh aspect; or implement the methods in the eighth aspect to the fourteenth aspect and the possible designs of the eighth aspect to the fourteenth aspect; or implement the methods in the fifteenth aspect and the sixteenth aspect and the possible designs of the fifteenth aspect and the sixteenth aspect.

According to a twenty-seventh aspect, this application provides a communication system, including the terminal device in the first aspect to the fifth aspect and the possible designs of the first aspect to the fifth aspect, and the first network device in the eighth aspect to the twelfth aspect and the possible designs of the eighth aspect to the twelfth aspect; or including the terminal device in the sixth aspect and the seventh aspect and the possible designs of the sixth aspect and the seventh aspect, the first network device in the thirteenth aspect and the fourteenth aspect and the possible designs of the thirteenth aspect and the fourteenth aspect, and the second network device in the fifteenth aspect and the sixteenth aspect and the possible designs of the fifteenth aspect and the sixteenth aspect.

### BRIEF DESCRIPTION OF DRAWINGS

FIG. 1 is a schematic diagram of a random access occasion according to an embodiment of this application;
FIG. 2 is a schematic diagram of a communication system applied to embodiments of this application;
FIG. 3 is a schematic flowchart of a communication method according to an embodiment of this application;
FIG. 4a is a schematic diagram of DCI according to an embodiment of this application;
FIG. 4b is another schematic diagram of DCI according to an embodiment of this application;
FIG. 4c is still another schematic diagram of DCI according to an embodiment of this application;
FIG. 5 is a schematic flowchart of another communication method according to an embodiment of this application;
FIG. 6 is yet another schematic diagram of DCI according to an embodiment of this application;
FIG. 7 is a schematic flowchart of still another communication method according to an embodiment of this application;
FIG. 8 is a schematic diagram of sending uplink timing information to a serving cell by a non-serving cell according to an embodiment of this application;
FIG. 9 is a schematic flowchart of yet another communication method according to an embodiment of this application;
FIG. 10 is a schematic diagram of a communication system according to an embodiment of this application;
FIG. 11 is a schematic diagram of a communication apparatus according to an embodiment of this application;
FIG. 12 is another schematic diagram of a communication apparatus according to an embodiment of this application; and
FIG. 13 is still another schematic diagram of a communication apparatus according to an embodiment of this application.

### DESCRIPTION OF EMBODIMENTS

The following further describes in detail this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the word "example" is used to indicate instances, illustrations, or descriptions. Any embodiment or design scheme described as "example" in this application should not be construed as being more preferred or advantageous than other embodiments or design schemes. To be exact, use of the word "example" is intended to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Some terms in embodiments of this application are first described, to facilitate understanding by a person skilled in the art.
(1) Air interface protocol layers (layers) include a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, and the like.
   In the 3rd generation partnership project (3rd generation partnership project, 3GPP) new radio (new radio access technology, NR) standard, the PHY layer is a bottom layer of the protocol layers, and is also referred to as layer 1 (layer 1, L1), and the MAC layer is the second layer of the protocol layers, and is also referred to as layer 2 (layer 2, L2).
(2) A beam (beam) is a communication resource. Different beams may be considered as different resources. Same information or different information may be transmitted by using different beams. Optionally, a plurality of beams having a same communication feature or similar communication features may be considered as one beam (or a group of beams). One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength, in different directions in space, of a radio signal received from an antenna. It may be understood that one or more antenna ports forming one beam may also be considered as one antenna port set.

The beam may be a wide beam, a narrow beam, or another type of beam. Generally, the width of a beam may be defined as a beamwidth of X decibels (dB). For example, the beamwidth is defined as a 1 dB beamwidth, a 3 dB beamwidth, or the like. The X dB beamwidth includes a horizontal X dB beamwidth or a vertical X dB beamwidth. Generally, a wide beam and a narrow beam are related to the 3 dB beamwidth. The 3 dB beamwidth of a wide beam is relatively wide. Generally, the wide beam is used to provide wide coverage for broadcast signals. In comparison, the 3 dB beamwidth of a narrow beam is relatively narrow, and a coverage width of the narrow beam is relatively small, and the narrow beam is generally used for point-to-point communication.

A technology for forming the beam may be a beamforming technology or another technical means. The beamforming technology may be a digital beamforming technology, an analog beamforming technology, a hybrid digital/analog beamforming technology, or the like. This is not limited in embodiments of this application.

When a low frequency band or an intermediate frequency band is used, signals may be sent in an omnidirectional manner or sent at a relatively wide angle. When a high frequency band is used, because of a relatively small carrier wavelength of a high frequency communication system, antenna arrays including many antenna elements may be disposed at a transmit end and a receive end. For example, the transmit end sends a signal by using a specific beamforming weight, so that the sent signal forms a beam having spatial directivity. In addition, the receive end receives the signal with an antenna array by using a specific beamforming weight, to improve a receive power of the signal at the receive end and counteract a path loss.

(3) Quasi co-location/quasi-co-location (quasi co-location, QCL): A co-location relationship is used to indicate that a plurality of resources have one or more same or similar communication features. Same or similar communication configurations may be used for a plurality of resources having a co-location relationship. For example, if two antenna ports have the co-location relationship, a large-scale channel property in which one port transmits a symbol may be inferred from a large-scale channel property in which the other port transmits a symbol. The large-scale property may include delay spread, an average delay, Doppler spread, Doppler frequency shift, an average gain, a receive parameter, a receive beam number of the terminal device, transmit/receive channel correlation, an angle of arrival, spatial correlation of a receiver antenna, a dominant angle of arrival (angle-of-arrival, AoA), an average angle of arrival, AoA spread, and the like. Co-location indication indicates whether at least two groups of antenna ports have a co-location relationship, that is, the co-location indication indicates whether channel state information reference signals sent by the at least two groups of antenna ports are from a same transmission point, or the co-location indication indicates whether channel state information reference signals sent by the at least two groups of antenna ports are from a same beam group.

In other words, if there is a QCL relationship, the terminal device may inherit a receiving or sending parameter used when a reference signal is previously received, to receive or send a subsequent signal.

QCL types (Types) include QCL-Type A, QCL-Type B, QCL-Type C, QCL-Type D, and the like. QCL-Type A, QCL-Type B, and QCL-Type C are used to indicate time domain information, frequency domain information, and the like, and assist the terminal device in data receiving, demodulation, and the like. QCL-Type D is used to indicate a beam, and assist the terminal device in beamforming. Unless otherwise specified, the following uses QCL-Type D as an example for description.

(4) Reference signal (reference signal, RS): According to the long term evolution (long term evolution, LTE)/NR protocol, at the physical layer, uplink communication includes transmission of a physical uplink channel and an uplink signal. The physical uplink channel includes a random access channel (random access channel, PRACH), a physical uplink control channel (physical uplink control channel, PUCCH), a physical uplink data channel (physical uplink shared channel, PUSCH), or the like. The uplink signal includes a sounding reference signal (sounding reference signal, SRS), a PUCCH-demodulation reference signal (de-modulation reference signal, DMRS), a PUSCH-DMRS, an uplink phase noise tracking reference signal (phase noise tracking reference signal, PTRS), an uplink positioning reference signal (uplink positioning RS), or the like. Downlink communication includes transmission of a physical downlink channel and a downlink signal. The physical downlink channel includes a physical broadcast channel (physical broadcast channel, PBCH), a physical downlink control channel (physical downlink control channel, PDCCH), a physical downlink data channel (physical downlink shared channel, PDSCH), or the like. The downlink signal includes a primary synchronization signal (primary synchronization signal, PSS)/secondary synchronization signal (secondary synchronization signal, SSS), a PDCCH-DMRS, a PDSCH-DMRS, a downlink PTRS, a channel state information reference signal (channel status information reference signal, CSI-RS), a cell signal (cell reference signal, CRS) (not available in NR), a time/frequency tracking reference signal (time/frequency tracking reference signal, TRS) (not available in LTE), an LTE/NR positioning signal (positioning RS), or the like.

(5) A transmission configuration indicator (transmission configuration indicator, TCI) is a field indicating quasi co-location of PDSCH antenna ports. The TCI is configured by RRC signaling, and is referred to as a TCI state (State) in the RRC signaling. A higher layer configures one or more QCL relationships by using TCI states, that is, configures one or more QCL relationships between downlink signals and PDSCH-DMRSs.

After RRC signaling is configured, a network device may send a MAC-control element (control element, CE) to activate one or more TCI states.

Further, the network device may send DCI to indicate one of the one or more activated TCI states. If a TCI state includes QCL-Type D information, the TCI state may be used to indicate one or more beams. Specifically, the DCI includes a TCI field, and the TCI field indicates a TCI state. For example, the TCI field occupies three bits, and may represent eight different field values (codepoint). Each field value of the TCI field corresponds to one TCI state index, and the TCI state index uniquely identifies one TCI state. The TCI state indicated by the TCI field includes QCL-Type D information, and the QCL-Type D information includes a reference signal. The reference signal may be a synchronization signal block (synchronization signal block, SSB), and an index of the SSB is indicated by an SSB index (index) field in DCI. Generally, the SSB is from a cell on which a terminal device camps. Alternatively, the reference signal may be a channel state information reference signal (Channel state information, CSI-RS), and a resource index of the CSI-RS is indicated by a CSI-RS resource identity (resource identity).

(6) A TCI state of a first network device (which may also be referred to as a TCI state of a serving cell) in embodiments of this application may be understood as that a reference signal in QCL-Type D information included in the TCI state is from a cell on which a terminal device camps.

A TCI state of a second network device (which may also be referred to as a TCI state of a non-serving cell) in embodiments of this application may be understood as that a reference signal in QCL-Type D information included in the TCI state is from a cell different from a cell on which the terminal device currently camps.

(7) Random access is a process of establishing a radio link between a terminal device and a network device. After random access is completed, data exchange may be performed between the terminal device and the network device. Random access includes contention based random access (contention based random access, CBRA) and contention free random access (contention free random access, CFRA).

A contention based random access process includes the following steps: A terminal device sends a message (Msg) 1 to a network device, where the Msg1 includes a random access preamble; the network device sends a Msg2 to the terminal device, where the Msg2 includes a temporary cell-radio network temporary identifier (cell-radio network temporary identifier, C-RNTI) allocated to the terminal device; the terminal device sends a Msg3 to the network device, where the Msg3 includes a temporary C-RNTI; and the network device sends a Msg4 to the terminal device, where the Msg4 includes a C-RNTI allocated to the terminal device that succeeds in accessing. In this case, it may be considered that the terminal device completes random access.

A contention free random access process includes the following steps: A terminal device sends a Msg1 to a network device, and the network device sends a Msg4 to the terminal device. The contention free random access process does not require the Msg2 or Msg3. In the contention free random access, a preamble sequence is allocated by the network device. For example, the network device sends the preamble sequence to the terminal device by using RRC signaling or PDCCH signaling.

(8) A random access occasion (RACH occasion, RO) includes time domain, frequency domain, and code domain resources. The time domain resource and the frequency domain resource are time-frequency resource locations at which the terminal device sends a random access request, and the code domain resource is a preamble sequence used by the terminal device to send the random access request. For contention free random access, the preamble sequence is directly indicated by the network device by using signaling.

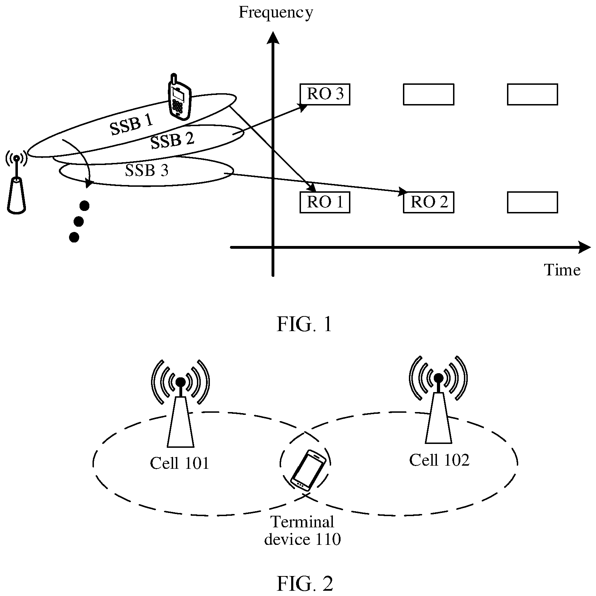

A synchronization signal is sent in a form of a scanning beam. The terminal device selects an RO, and implicitly notifies, based on an association relationship between the RO and a synchronization signal, the network device of a direction corresponding to the synchronization signal in which received signal strength of the terminal device is the strongest, so that the network device sends a random access response to the terminal device in the direction. As shown in FIG. 1, the terminal device determines, through measurement, that receive strength of a synchronization signal and PBCH block (synchronization signal and PBCH block, SSB) 1 signal is the largest. Therefore, the terminal device may select RO 1 associated with the SSB 1 signal to initiate random access, that is, send a random access request to the network device on RO 1. Correspondingly, the network device receives the random access request at time-frequency locations corresponding to RO 1, and sends a random access response to the terminal device by using a beam for sending the SSB 1 signal.

The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

In this application, "at least one" means one or more, and "a plurality of" means two or more.

In addition, it should be understood that in description of this application, terms such as "first" and "second" are merely used for distinguishing and description, but should not be understood as indicating or implying relative importance, or should not be understood as indicating or implying a sequence.

The foregoing describes some terms in embodiments of this application. The following describes application scenarios to which embodiments of this application are applicable.

The technical solutions in the embodiments of this application may be applied to various communication systems, The communication systems usually include but are not limited to a 4th generation (4th generation, 4G) communication system (for example, an LTE system), a 5th generation (5th generation, 5G) communication system (for example, an NR system), a future mobile communication system, and the like. This application may also be applied to another communication system, for example, a satellite communication system. The satellite communication system may be integrated with the foregoing communication system.

The communication system provided in embodiments of this application is applicable to communication between a network device and a terminal device. The communication system may include one or more network devices and one or more terminal devices. The network device may transmit data and control signaling to the terminal device. For example, as shown in FIG. 2, the communication system may include a plurality of network devices (for example, a cell 101 and a cell 102) and one terminal device (for example, a terminal device 110). The communication system in embodiments of this application may also be applicable to communication between network devices, communication between terminal devices, and communication of the Internet of Vehicles, the Internet of Things, the industrial Internet, and the like.

The cell 101 may be a cell on which the terminal device 110 currently camps, and is a serving cell of the terminal device 110. For example, the cell 101 may be a source serving cell, and the cell 102 may be a target serving cell. The cell 101 may send signaling to the terminal device 110, so that the terminal device 110 is handed over from the cell 101 to the cell 102. For another example, the communication system supports a multi-transmission/reception point (transmission/reception point, TRP) mode between cells. The terminal device 110 camping on the cell 101 receives a PDCCH or a PDSCH from the cell 102. In other words, the terminal device 110 receives a signal from an antenna of the cell 102. In this scenario, the terminal device 110 does not switch the serving cell, and the serving cell of the terminal device 110 is still the cell 101.

For example, the network device in embodiments of this application is a device that connects the terminal device to a wireless network. The network device may be a node in a radio access network, and may also be referred to as a base station, or may be referred to as a radio access network (radio access network, RAN) node (or device). For example, the network device may include an evolved NodeB (NodeB or eNB or eNodeB, evolved NodeB) in an LTE system or an LTE-advanced (LTE-Advanced, LTE-A) system, for example, a conventional macro base station eNB and a micro base station eNB in a heterogeneous network scenario, or may include a next generation NodeB (next generation nodeB, gNB) in a 5G NR system, or may include a transmission reception point (transmission reception point, TRP), a home base station (for example, a home evolved NodeB, or a home NodeB, HNB), a baseband unit (base band unit, BBU), a baseband unit pool BBU pool, a wireless fidelity (wireless fidelity, Wi-Fi) access point (access point, AP), or the like, or may include a centralized unit (centralized unit, CU) and a distributed unit (distributed unit, DU) in a cloud radio access network (cloud radio access network, Cloud RAN) system, or may include a network device in a non-terrestrial network (non-terrestrial network, NTN), in other words, may be deployed on a high-altitude platform or a satellite. In the NTN, the network device may be used as a layer 1 (L1) relay (relay), or may be used as a base station, or may be used as a DU, or may be used as an integrated access and backhaul (integrated access and backhaul, IAB) node. This is not limited in embodiments of this application. Certainly, the network device may also be a node in a core network.

For example, the terminal device in embodiments of this application may be a device configured to implement a wireless communication function, for example, a terminal or a chip that may be used in a terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal (for example, an internet of vehicles device) in vehicle-to-everything (vehicle-to-everything, V2X), a terminal in device-to-device (Device to Device) communication, a terminal in machine-to-machine (machine to machine, M2M) communication, or the like. The terminal may be mobile or fixed.

Embodiments of this application provide a communication method. The method may be applied to the communication system shown in FIG. 2. The first network device in embodiments of this application may be the cell 101 in the communication system shown in FIG. 2. The second network device in embodiments of this application may be the cell 102 in the communication system shown in FIG. 2, or a TRP corresponding to the cell 101 in the communication system shown in FIG. 2, or an antenna or a radio unit (radio unit) corresponding to the cell 101 in the communication system shown in FIG. 2, or a remote radio unit (remote radio unit, RRU) corresponding to the cell 101 in the communication system shown in FIG. 2. The terminal device in embodiments of this application may be the terminal device 110 in the communication system shown in FIG. 2, or a component of the terminal device 110.

Embodiments of this application provide a communication method, to implement communication between a terminal device and a non-serving cell. The following describes the communication method provided in embodiments of this application by using an example in which the first network device is the cell 101 and the second network device is the cell 102.

### Embodiment 1

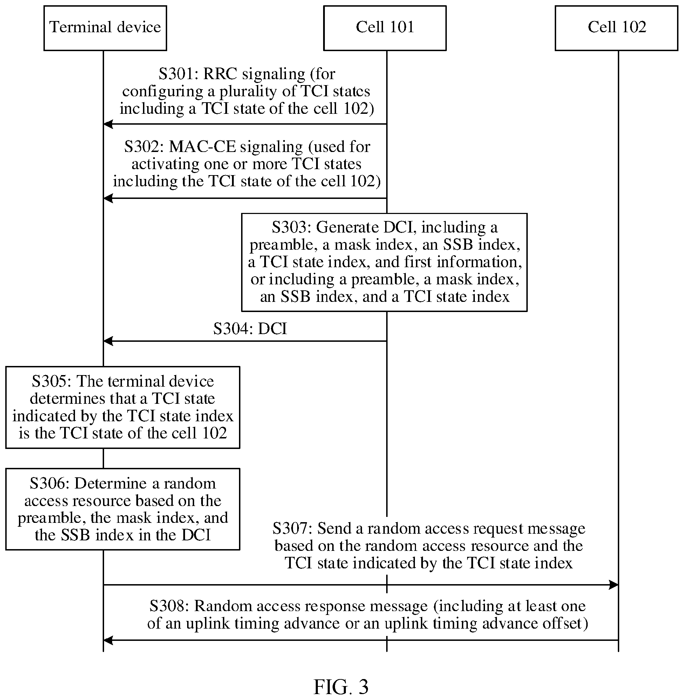

FIG. 3 is a schematic flowchart of a communication method according to an embodiment of this application. As shown in FIG. 3, in this embodiment, the communication method provided in this embodiment is described from a perspective of performing cell handover by a terminal device. In this embodiment, an example in which DCI is in DCI format 1_0 is used for description.

S301: A cell 101 sends higher layer signaling to the terminal device, and correspondingly, the terminal device receives the higher layer signaling.

The cell 101 is a cell on which the terminal device currently camps, and is a serving cell of the terminal device. For example, a radio resource control (radio resource control, RRC) connection is established between the cell 101 and the terminal device. The higher layer signaling may be, for example, RRC signaling. This is not limited in this embodiment of this application. The higher layer signaling is used for configuring one or more TCI states. For ease of description, the following uses an example in which the cell 101 configures a plurality of TCI states for the terminal device for description. The plurality of TCI states may include a TCI state of the cell 101 and a TCI state of a cell 102. The TCI state of the cell 101 may indicate a beam of the cell 101, and the beam of the cell 101 may be used for communication between the cell 101 and the terminal device. The TCI state of the cell 102 may indicate a beam of the cell 102, and the beam of the cell 102 may be used for communication between the cell 102 and the terminal device. For example, the cell 101 may obtain the TCI state of the cell 102 by interacting with the cell 102. In this embodiment, the cell 102 is a non-serving cell of the terminal device.

S302: The cell 101 sends MAC-CE signaling to the terminal device, and correspondingly, the terminal device receives the MAC-CE signaling.

The MAC-CE signaling is used for activating one or more of the plurality of TCI states. For example, after receiving the MAC-CE signaling, the terminal device may activate one or more of the plurality of TCI states configured in step S301. The one or more activated TCI states include at least the TCI state of the cell 102. For example, the MAC-CE signaling activates a TCI state, and the activated TCI state is the TCI state of the cell 102. For another example, the MAC-CE signaling activates a plurality of TCI states, and the plurality of activated TCI states include the TCI state of the cell 102, or include the TCI state of the cell 101 and the TCI state of the cell 102.

S303: The cell 101 generates DCI.

The DCI may indicate one of the one or more activated TCI states. In this embodiment, the DCI is in DCI format 1_0. Generally, DCI format 1_0 is used to indicate a TCI state of a cell on which the terminal device camps (that is, the cell 101). In this embodiment, the DCI is used to indicate a TCI state of a non-serving cell of the terminal device (that is, the cell 102). The cell 101 may generate, in the following three manners, the DCI indicating the TCI state of the cell 102.

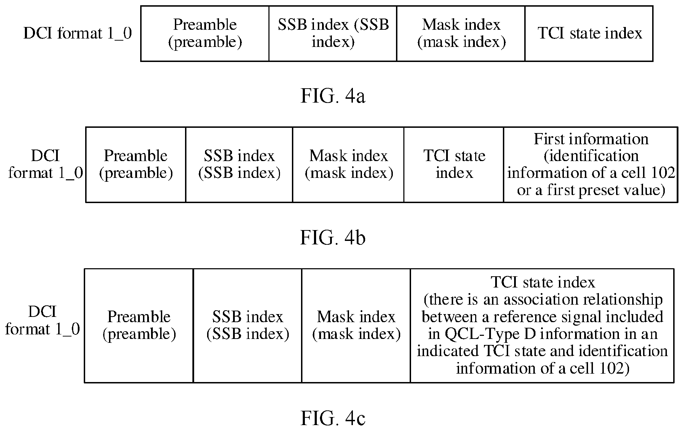

Manner 1: The cell 101 may map a preamble (preamble) and a mask index (mask index) to specific values, and use the specific values to indicate that an SSB indicated by an SSB index (SSB index) is an SSB of the cell 102; and generate DCI based on a TCI state index of the cell 101. There is a correspondence between the SSB of the cell 102 and the TCI state of the cell 102. In this case, the DCI includes the preamble (preamble), the SSB index (SSB index), the mask index (mask index), and the TCI state index, as shown in FIG. 4a. Optionally, a value of the preamble is all zeros (for example, 0000 0000), and a value of the mask index is all ones (for example, 1111 1111). In this case, the values of the preamble and the mask index may indicate the terminal device to hand over to a target cell by using a contention based random access resource.

In the foregoing manner 1, the values of the preamble and the mask index in the DCI are used to indicate that the SSB indicated by the SSB index is the SSB of the non-serving cell. In this way, the terminal device can obtain the SSB of the non-serving cell by parsing the SSB index, and there is a correspondence between the SSB of the non-serving cell and the TCI state of the non-serving cell, so that the terminal device can determine that the TCI state indicated by the TCI state index is the TCI state of the non-serving cell. That is, in the foregoing manner 1, the values of the preamble and the mask index are used to implicitly indicate that the TCI state indicated by the TCI state index is the TCI state of the non-serving cell, so as to implement indication of the TCI state of the non-serving cell by using the DCI. In addition, no additional information needs to be added to the DCI, so that DCI complexity can be reduced, and DCI transmission overheads can be reduced.

Manner 2: The cell 101 may add first information to the DCI, for example, map one or more reserved bits in the DCI to the first information, where there is a correspondence between the first information and the TCI state of the cell 102; and generate the DCI based on the TCI state of the cell 101. In this case, the DCI includes a TCI state index and the first information. Optionally, the DCI may further include one or more of a preamble, an SSB index, and a mask index. For example, the DCI may include the preamble, the SSB index, the mask index, the TCI state index, and the first information, as shown in FIG. 4b. FIG. 4b is used as an example below. The first information includes at least one of identification information of the cell 102 or a first preset value. The identification information is, for example, a cell identity (cell identity), a physical cell identity (physical cell identity, PCI), or other information that identifies the cell 102. This is not limited in this embodiment of this application. There is a correspondence between the first preset value and the TCI state of the cell 102. The first preset value may be predefined, or preconfigured by the cell 102, or the like. This is not limited in this embodiment of this application.

In the foregoing manner 2, the cell 101 may add the identification information of the non-serving cell to the DCI, and explicitly indicate, by using the identification information of the non-serving cell, that a TCI state indicated by the TCI state index is the TCI state of the non-serving cell; or the cell 101 may add the first preset value to the DCI, and explicitly indicate, by using the correspondence between the first preset value and the TCI state of the non-serving cell, that the TCI state indicated by the TCI state index is the TCI state of the non-serving cell. In this way, indication of the TCI state of the non-serving cell by using the DCI is implemented.

Manner 3: The cell 101 may associate a reference signal included in QCL-Type D information in a TCI state indicated by a TCI state index with identification information of the cell 102, and generate DCI based on the TCI state index. There is an association relationship between the reference signal included in the QCL-Type D information in the TCI state indicated by the TCI state index and the identification information of the cell 102. In this case, the DCI includes the TCI state index. Optionally, the DCI may further include one or more of a preamble, an SSB index, and a mask index. For example, the DCI may include the preamble, the SSB index, the mask index, and the TCI state index, as shown in FIG. 4c. FIG. 4c is used as an example below. For the identification information of the cell 102, refer to the description in the foregoing manner 2. Details are not described herein again. The reference signal included in the QCL-Type D information may be, for example, an SSB or a CSI-RS. This is not limited in this embodiment of this application.

In the foregoing manner 3, there is an association relationship between the reference signal included in the QCL-Type D information in the TCI state indicated by the TCI state index in the DCI and the identification information of the cell 102. In this way, the terminal device can determine, by parsing the DCI, that the TCI state indicated by the TCI state index is the TCI state of the non-serving cell. In other words, in the foregoing manner 3, the reference signal included in the QCL-Type D information is used to implicitly indicate that the TCI state indicated by the TCI state index is the TCI state of the non-serving cell, so as to implement indication of the TCI state of the non-serving cell by using the DCI. In addition, no additional information needs to be added to the DCI, so that DCI complexity can be reduced, and DCI transmission overheads can be reduced.

In a possible implementation, manner 2 and manner 3 may be used in combination. To be specific, the cell 101 may add the first information to the DCI, associate the reference signal included in the QCL-Type D information in the TCI state indicated by the TCI state index with the identification information of the cell 102, and generate the DCI based on the TCI state index.

It should be noted that, in the foregoing manner 1, manner 2, and manner 3, the TCI state index in the DCI is the TCI state index of the cell 101. In another possible implementation, the TCI state index in the DCI may alternatively be a TCI state index of the cell 102.

It should be understood that DCI format 1_0 shown in FIG. 4a, FIG. 4b, and FIG. 4c is merely an example, and a specific implementation of DCI format 1_0 is not limited thereto.

In a possible implementation, the cell 101 generates a first message. The first message includes handover indication information and the identification information of the cell 102. The handover indication information may explicitly or implicitly indicate the terminal device to perform cell handover or not. The first message may be DCI or MAC-CE signaling. For example, the first message includes handover indication information, and the handover indication information indicates the terminal device not to perform cell handover. In this case, the terminal device may perform beam switching, but does not perform cell handover. For example, the first message includes handover indication information, and the handover indication information indicates the terminal device to perform cell handover. In this case, the terminal device performs cell handover. For another example, the first message does not include handover indication information. In this case, the terminal device performs beam switching, but does not perform cell handover. For another example, the first message includes handover indication information. In this case, the terminal device performs cell handover. Optionally, when performing beam switching, the terminal device applies configuration information of the cell 102 that is received in advance from the cell 101. The configuration information may include, for example, one or more of a preamble, an SSB index, and a mask index. In this embodiment, an example in which the terminal device performs cell handover is used.

In an example, the first message may further include timing indication information and a TCI state index. A TCI state indicated by the TCI state index is the TCI state of the cell 102. The timing indication information may indicate a timing used when the terminal device communicates with the cell 102. For example, the timing indication information may indicate the terminal device to use one of one or more currently maintained timings as the timing used when the terminal device communicates with the cell 102. For another example, the timing indication information indicates a timing offset, and a sum of the timing offset and a timing used when the terminal device communicates with the cell 101 is the timing used when the terminal device communicates with the cell 102. For another example, the timing indication information indicates a timing advance, and the terminal device may communicate with the cell 102 based on the timing advance indicated by the timing indication information. In this way, the terminal device can perform beam switching based on the handover indication information and the TCI state index, and communicate with the cell 102 based on the timing indicated by the timing indication information. The first message does not need to include configuration information used for random access. The configuration information includes at least one of a preamble, an SSB index, or a mask index.

In another example, the first message may further include a TCI state index and second information, and the second information includes at least one of a preamble, an SSB index, or a mask index. In this way, the terminal device can determine, based on the handover indication information and the second information, a random access resource used for random access, and send a random access request message to the cell 102 based on the random access resource and a TCI state indicated by the TCI state index.

In still another example, the first message may include a TCI state index, and does not include configuration information used for determining a random access resource. In this way, the terminal device can determine, based on the handover indication information and preset configuration information (or configuration information received in advance or the like), a random access resource used for random access, and send a random access request message to the cell 102 based on the random access resource and a TCI state indicated by the TCI state index. The preset configuration information includes at least one of a preamble, an SSB index, or a mask index.

In the foregoing implementation, the handover indication information may explicitly or implicitly indicate the terminal device whether to perform cell handover. In another possible implementation, the handover indication information may further indicate that the TCI state indicated by the TCI state index is the TCI state of the cell 102. For example, the handover indication information may implicitly indicate that the TCI state indicated by the TCI state index is the TCI state of the cell 102, so as to implement indication of the TCI state of the non-serving cell by using the DCI.

In the foregoing implementation, the cell 101 generates the first message. The first message includes the handover indication information, the identification information of the cell 102, the timing indication information, and the TCI state index. In another possible implementation, the cell 101 generates the first message. The first message includes the timing indication information, the TCI state index, and the identification information of the cell 102, and the timing indication information indicates a timing used when the terminal device communicates with the cell 102. The first message may be DCI or MAC-CE signaling. In this implementation, the first message may not include configuration information used for determining a random access resource, and the configuration information includes at least one of a preamble, an SSB index, and a mask index. In this way, in response to the first message, the terminal device performs beam switching based on the TCI state indicated by the TCI state index, and communicates with the cell 102 based on the timing indicated by the timing indication information, thereby implementing communication between the terminal device and the non-serving cell. For a specific implementation of the timing indication information, refer to the foregoing descriptions. Details are not described herein again.

S304: The cell 101 sends the DCI to the terminal device, and correspondingly, the terminal device receives the DCI from the cell 101.

S305: The terminal device determines that the TCI state indicated by the TCI state index is the TCI state of the cell 102.

After receiving the DCI, the terminal device parses the DCI to obtain the preamble, the SSB index, the mask index, and the TCI state index, or obtain the preamble, the SSB index, the mask index, the TCI state index, and the first information. Further, the terminal device may determine that the TCI state indicated by the TCI state index is the TCI state of the cell 102.

For example, when the DCI includes the preamble, the SSB index, the mask index, the TCI state index, and the first information, the terminal device may determine, based on the first information, that the TCI state indicated by the TCI state index in the DCI is the TCI state of the cell 102. If the first information includes the identification information of the cell 102, the terminal device may determine, based on the identification information of the cell 102, that the TCI state indicated by the TCI state index is the TCI state of the cell 102. If the first information includes the first preset value, the terminal device may determine, based on the first preset value and the correspondence between the first preset value and the TCI state of the cell 102, that the TCI state indicated by the TCI state index is the TCI state of the cell 102.

Optionally, the correspondence between the first preset value and the TCI state of the cell 102 may be predefined, or may be preconfigured. For example, the cell 101 may send configuration information to the terminal device, and the configuration information includes the correspondence between the first preset value and the TCI state of the cell 102.

For another example, when the DCI includes the preamble, the SSB index, the mask index, and the TCI state index, the terminal device may determine, based on the value of the preamble and the value of the mask index, that the TCI state indicated by the TCI state index in the DCI is the TCI state of the cell 102. Specifically, the terminal device determines, based on the value of the preamble and the value of the mask index, that the SSB indicated by the SSB index is the SSB of the cell 102, and determines, based on the SSB indicated by the SSB index and the correspondence between the SSB of the cell 102 and the TCI state of the cell 102, that the TCI state indicated by the TCI state index is the TCI state of the cell 102.

Optionally, the correspondence between the SSB of the cell 102 and the TCI state of the cell 102 may be predefined or preconfigured. For example, the cell 101 may send configuration information to the terminal device, and the configuration information includes the correspondence between the first preset value and the TCI state of the cell 102.

For another example, when the DCI includes the preamble, the SSB index, the mask index, and the TCI state index, the terminal device may determine, based on the reference signal included in the QCL-Type D information in the TCI state indicated by the TCI state index, that the TCI state indicated by the TCI state index is the TCI state of the cell 102. Specifically, the terminal device determines, based on the association relationship between the identification information of the cell 102 and the reference signal included in the QCL-Type D information in the TCI state indicated by the TCI state index, that the TCI state indicated by the TCI state index is the TCI state of the cell 102.

S306: The terminal device determines a random access resource based on the preamble, the mask index, and the SSB index.

The random access resource may include a time domain resource, a frequency domain resource, an RO, and the like. The random access resource is used for carrying a random access request message sent by the terminal device to the cell 102. Specifically, after receiving the DCI, the terminal device parses the DCI to obtain the preamble, the mask index, and the SSB index, and determines that the preamble is a preamble corresponding to the cell 102, the mask index is a mask index corresponding to the cell 102, and the SSB index is an SSB index corresponding to the cell 102. Further, the terminal device may determine, based on the preamble corresponding to the cell 102, the mask index corresponding to the cell 102, and the SSB index corresponding to the cell 102, the random access resource used for sending the random access request message to the cell 102, to initiate a random access process with the cell 102.

For example, when the DCI includes the preamble, the mask index, the SSB index, the TCI state index, and the first information, and the first information includes the identification information of the cell 102, the terminal device may determine, based on the identification information of the cell 102, that the preamble in the DCI is the preamble corresponding to the cell 102, the mask index is the mask index corresponding to the cell 102, and the SSB index is the SSB index corresponding to the cell 102; determine, based on the preamble, the time domain resource used for carrying the random access request message; determine, based on the mask index, the frequency domain resource used for carrying the random access request message; and determine, based on the SSB indicated by the SSB index, the RO for sending the random access request message.

For another example, when the DCI includes the preamble, the mask index, the SSB index, the TCI state index, and the first information, and the first information includes the first preset value, the terminal device may determine, based on the first preset value and a correspondence between the first preset value and the cell 102, that the TCI state indicated by the TCI state index in the DCI is the TCI state of the cell 102. Further, the terminal device may determine, based on the fact that the TCI state indicated by the TCI state index in the DCI is the TCI state of the cell 102, that the preamble in the DCI is the preamble corresponding to the cell 102, the mask index is the mask index corresponding to the cell 102, and the SSB index is the SSB index corresponding to the cell 102; determine, based on the preamble, the time domain resource used for carrying the random access request message; determine, based on the mask index, the frequency domain resource used for carrying the random access request message; and determine, based on the SSB indicated by the SSB index, the RO for sending the random access request message.

For another example, when the DCI includes the preamble, the mask index, the SSB index, and the TCI state index, and the values of the preamble and the mask index indicate that the SSB indicated by the SSB index is the SSB of the cell 102, based on the fact that the SSB indicated by the SSB index is the SSB of the cell 102, the terminal device may interpret the preamble in the DCI as the preamble corresponding to the cell 102, and interpret the mask index as the mask index corresponding to the cell 102; and determine, based on the preamble, the time domain resource used for carrying the random access request message, determine, based on the mask index, the frequency domain resource used for carrying the random access request message, and determine, based on the SSB indicated by the SSB index, the RO for sending the random access request message.

For another example, when the DCI includes the preamble, the mask index, the SSB index, and the TCI state index, and there is an association relationship between the reference signal included in the QCL-Type D information in the TCI state indicated by the TCI state index and the identification information of the cell 102, the terminal device may determine that the TCI state indicated by the TCI state index in the DCI is the TCI state of the cell 102, interpret the SSB indicated by the SSB index in the DCI as the SSB of the cell 102, interpret the preamble as the preamble corresponding to the cell 102, and interpret the mask index as the mask index corresponding to the cell 102; and determine, based on the preamble, the time domain resource used for carrying the random access request message, determine, based on the mask index, the frequency domain resource used for carrying the random access request message, and determine, based on the SSB indicated by the SSB index, the RO for sending the random access request message.

In a possible implementation, the value of the preamble may be a second preset value (for example, the value is 0, and if the value is a field of a plurality of bits, a plurality of zeros are displayed). The terminal device may update the value of the preamble from the second preset value to a third preset value based on the fact that the TCI state indicated by the TCI state index in the DCI is the TCI state of the cell 102. There is a correspondence between the third preset value and the TCI state of the cell 102. For example, the terminal device may determine the TCI state of the cell 102 based on the TCI state index, determine the third preset value based on the correspondence between the third preset value and the TCI state of the cell 102, and update the value of the preamble from the second preset value to the third preset value. For example, the terminal device may determine the third preset value corresponding to the TCI state of the cell 102 from a preconfigured random access resource (for example, a contention free random access resource) based on the TCI state of the cell 102. The preconfigured random access resource includes the correspondence between the third preset value and the TCI state of the cell 102. The third preset value may be a value of a preamble corresponding to a TCI state of a cell, or the third preset value may be a value of a preamble corresponding to TC states of a plurality of cells.

In this manner, the cell 101 does not need to add the preamble of the cell 102 to the DCI, so that complexity of the DCI can be reduced, and a structure of the DCI is simpler. Generally, less information carried in the signaling indicates less network resources consumed for transmitting the signaling. Therefore, in this manner, network resources consumed for transmitting the DCI can be further reduced, and network resource utilization can be improved.

Optionally, the correspondence between the third preset value and the TCI state of the cell 102 may be predefined, or may be preconfigured. For example, the cell 101 may send configuration information to the terminal device, where the configuration information includes the correspondence between the third preset value and the TCI state of the cell 102.

In step S306, the terminal device may determine the random access resource based on the preamble, the mask index, and the SSB index. In another possible implementation, when the DCI includes the identification information of the cell 102, the terminal device may determine the random access resource based on the identification information of the cell 102 and a preconfigured random access resource of the cell 102. There is a correspondence between the identification information of the cell 102 and the preconfigured random access resource of the cell 102.

S307: The terminal device sends a random access request message to the cell 102 based on the random access resource and the TCI state indicated by the TCI state index, and correspondingly, the cell 102 receives the random access request message.

After determining the random access resource, the terminal device may initiate a random access process between the terminal device and the cell 102. For example, the terminal device may determine an uplink beam based on a downlink beam corresponding to the TCI state indicated by the TCI state index, and then send the random access request message to the cell 102 by using the determined uplink beam and the random access resource. That the terminal device may determine an uplink beam based on a downlink beam corresponding to the TCI state indicated by the TCI state index may be understood as that the terminal device determines a spatial filter parameter for uplink sending by using a spatial filter (spatial filter) that is determined based on the reference signal (for example, an SSB) in the QCL-Type D information of the TCI state indicated by the TCI state index. It may be understood that, in step 307, the terminal device completes switching from the beam of the cell 101 to the beam of the cell 102, that is, L1/L2 beam switching.

In a possible implementation, the terminal device may determine transmit power of the random access request message. Specifically, the terminal device may determine a path loss between the terminal device and the cell 102 based on transmit power of a reference signal and receive power of the reference signal, and determine the transmit power of the random access request message based on the path loss between the terminal device and the cell 102. In this embodiment, the reference signal may be a reference signal in QCL-Type D information of the TCI state of the cell 102, or the SSB indicated by the SSB index. Further, the terminal device may send the random access request message to the cell 102 based on the random access resource, the TCI state indicated by the TCI state index, and the transmit power of the random access request message.

For example, the reference signal may be the reference signal in the QCL-Type D information of the TCI state of the cell 102. After determining the TCI state of the cell 102, the terminal device may determine the reference signal (namely, QCL type D source RS) in the QCL-Type D information of the TCI state of the cell 102; determine the path loss between the terminal device and the cell 102 based on transmit power preconfigured for the reference signal and receive power obtained by the terminal device by measuring the reference signal; and determine the transmit power of the random access request message based on the path loss. The reference signal in the QCL-Type D information in the TCI state of the cell 102 may include a CSI-RS or an SSB. Optionally, when the reference signal in the QCL-Type D information in the TCI state of the cell 102 is a CSI-RS, the terminal device may determine, based on the CSI-RS, an SSB corresponding to the CSI-RS, determine the path loss between the terminal device and the cell 102 based on transmit power and receive power of the SSB, and determine the transmit power of the random access request message based on the path loss.

For another example, the reference signal may be the SSB indicated by the SSB index. After receiving the DCI, the terminal device parses the DCI to obtain the SSB index. After determining that the SSB indicated by the SSB index is the SSB of the cell 102, the terminal device determines the path loss between the terminal device and the cell 102 based on transmit power preconfigured for the SSB indicated by the SSB index and receive power obtained by the terminal device by measuring the SSB, and determines the transmit power of the random access request message based on the path loss.

Optionally, when the terminal device communicates with the cell 102 by using uplink timing information different from that for the cell 101, the random access request message may be further used to obtain the uplink timing information for communication between the terminal device and the cell 102. The uplink timing information includes at least one of an uplink timing advance or an uplink timing advance offset. For example, the cell 102 may send a random access response message to the terminal device. The random access response message includes the uplink timing information. That is, step S308 is performed.

In a possible implementation, the terminal device may send feedback information to the cell 101, and the feedback information may indicate whether the terminal device successfully receives the DCI, which is not shown in FIG. 3. The feedback information may be, for example, negative acknowledgement (non-acknowledgement, NACK) information, indicating that the terminal device does not receive the DCI; or may be acknowledgement (acknowledge, ACK) information, indicating that the terminal device successfully receives the DCI. For example, the terminal device may send the feedback information to the cell 101 after the cell 101 sends the DCI to the terminal device and before the terminal device sends the random access request message to the cell 102 (that is, after S304 and before S307). In this embodiment, an example in which the terminal device successfully receives the DCI generated by the cell 101 is used.

S308: The cell 102 sends a random access response message to the terminal device, and correspondingly, the terminal device receives the random access response message.

The random access response message includes the uplink timing information. The uplink timing information includes at least one of the uplink timing advance or the uplink timing advance offset.

At this point, the terminal device successfully obtains the uplink timing information between the terminal device and the non-serving cell (that is, the cell 102). Then, the terminal device may send uplink information, such as a PUCCH or a PUSCH, to the cell 102 based on the uplink timing information.

In the foregoing embodiment, the DCI delivered by the cell 101 explicitly indicates, by using the first information, that the TCI state indicated by the TCI state index in the DCI is the TCI state of the cell 102; or implicitly indicates, by using specific values of the preamble and the mask index, that the TCI state indicated by the TCI state index in the DCI is the TCI state of the cell 102, to implement indication of the TCI state of the cell 102 by using the DCI. The terminal device may initiate random access to the cell 102 based on the TCI state indicated by the TCI state index in the DCI and the random access resource determined by using the preamble, the mask index, and the SSB index. In other words, the terminal device can be triggered, based on L1/L2 signaling, to initiate random access to the non-serving cell. Compared with random access initiated by the terminal device based on higher layer signaling (for example, L3 signaling), the random access initiated based on the L1/L2 signaling requires less signaling interaction, so that signaling overheads can be reduced and a random access delay can be shortened.

Further, when communication between the terminal device and the non-serving cell requires uplink timing information different from that for the current camped cell, the terminal device may initiate a random access process to the non-serving cell to assist the non-serving cell in determining the uplink timing information between the terminal device and the non-serving cell, so that the terminal device can send uplink information to the non-serving cell based on the uplink timing information determined by the non-serving cell.

In the foregoing Embodiment 1, the cell 101 generates the DCI, and sends the DCI to the terminal device. In another possible implementation, the cell 101 may generate MAC-CE signaling, and send the MAC-CE signaling to the terminal device. The MAC-CE signaling may indicate one of the one or more activated TCI states. The cell 101 may use the MAC-CE signaling to indicate the TCI state of the cell 102 of the terminal device. Specifically, the cell 101 may generate the MAC-CE signaling that indicates the TCI state of the cell 102 in three manners, implementation processes of which are similar to the implementation processes of the three manners in which the cell 101 generates the DCI indicating the TCI state of the cell 102. That is, the DCI in the foregoing steps S303 to S306 may be replaced with the MAC-CE signaling. Details are not described herein again.

In the foregoing Embodiment 1, the second network device is the cell 102. In another possible implementation, the second network device may be a TRP corresponding to the cell 101, or an antenna or a radio unit corresponding to the cell 101, or an RRU corresponding to the cell 101. When the second network device is the TRP corresponding to the cell 101 (or the antenna, the radio unit, or the RRU corresponding to the cell 101), the cell 101 generates DCI (or MAC-CE signaling), and sends the DCI (or the MAC-CE signaling) to the terminal device. After receiving the DCI (or the MAC-CE signaling), the terminal device does not perform cell handover, and may determine, based on the DCI (or the MAC-CE signaling), a timing advance for communication with the TRP corresponding to the cell 101 (or the antenna, the radio unit, or the RRU corresponding to the cell 101). The DCI (or the MAC-CE signaling) may not include the first information or the handover indication information, or the first information and the handover indication information included in the DCI (or the MAC-CE signaling) are invalid.

### Embodiment 2

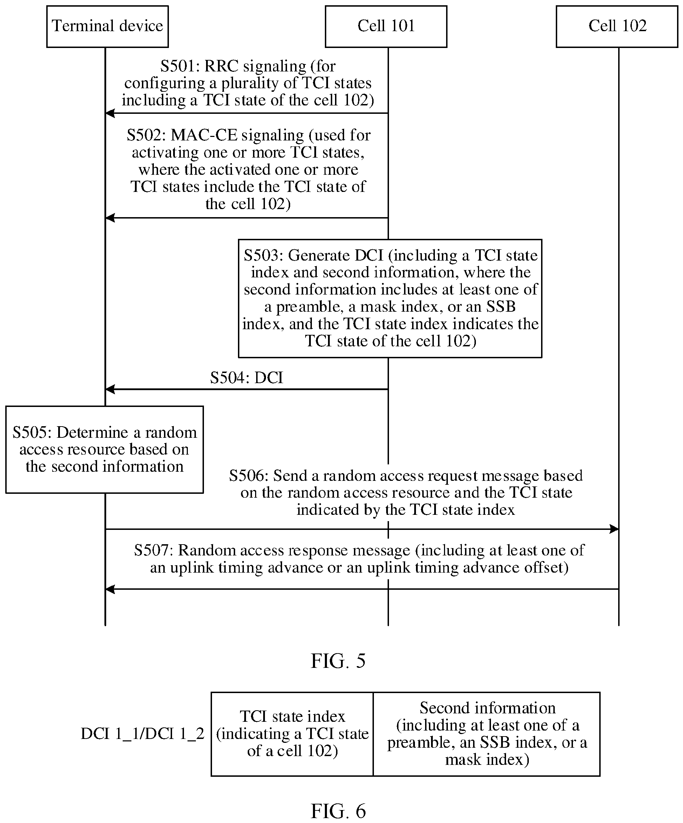

FIG. 5 is a schematic flowchart of a communication method according to an embodiment of this application. As shown in FIG. 5, in this embodiment, the communication method provided in this embodiment is described from a perspective of performing cell handover by a terminal device. In this embodiment, an example in which DCI is in DCI format 1_1 or DCI format 1_2 is used for description.

S501: A cell 101 sends higher layer signaling to the terminal device, and correspondingly, the terminal device receives the higher layer signaling.

The cell 101 is a cell on which the terminal device currently camps, and is a serving cell of the terminal device. For example, an RRC connection is established between the cell 101 and the terminal device. The higher layer signaling may be, for example, RRC signaling. This is not limited in this embodiment of this application. The higher layer signaling is used for configuring one or more TCI states. The one or more TCI states include a TCI state of a cell 102, and the cell 102 is a non-serving cell of the terminal device.

S502: The cell 101 sends MAC-CE signaling to the terminal device, and correspondingly, the terminal device receives the MAC-CE signaling.

The MAC-CE signaling is used for activating one or more of the plurality of TCI states. For example, after receiving the MAC-CE signaling, the terminal device may activate one or more of the plurality of TCI states configured in step S501.

For specific implementations of steps S501 and S502, refer to the foregoing steps S301 and S302 respectively. Details are not described herein again.

S503: The cell 101 generates DCI.

The DCI may indicate one of the one or more activated TCI states. In this embodiment, the DCI is in DCI format 1_1 or DCI format 1_2, and is denoted as DCI 1_1/DCI 1_2. Generally, DCI 1_1/DCI 1_2 cannot trigger a random access process with a non-serving cell. However, in this embodiment, the DCI may be used to trigger a random access process with the cell 102. For example, the cell 101 may generate the DCI based on a TCI state index and second information. In this case, the DCI includes the TCI state index and the second information, as shown in FIG. 6. The TCI state index indicates a TCI state of the cell 102. The second information includes at least one of a preamble, a mask index, or an SSB index, and the second information may be used to trigger a random access process with the cell 102.

It should be understood that FIG. 6 is used as an example and does not limit a specific implementation form of the DCI. For example, the DCI may further include a redundant version (redundant version, RV), a modulation and coding scheme (modulation and coding scheme, MCS) indicator, a new data indicator (new data indicator, NDI), frequency domain resource allocation (frequency domain resource allocation, FDRA), or the like.

The preamble in the second information is a preamble corresponding to the cell 102, the mask index in the second information is a mask index corresponding to the cell 102, and the SSB index in the second information is an SSB index corresponding to the cell 102.

For example, when the cell 101 uses the DCI to indicate the TCI state of the cell 102, that is, when the DCI is used to indicate a beam of the non-serving cell, some fields (for example, a reserved field in 6b is used as an example) in the DCI may be modified (repurpose), to carry at least one of the preamble corresponding to the cell 102, the mask index corresponding to the cell 102, or the SSB index corresponding to the cell 102. The preamble may occupy 6 bits, the mask index may occupy 4 bits, and the SSB index may occupy 6 bits.

For another example, when the DCI is scrambled by using a C-RNTI, the second information may be carried in a field that is originally used for data scheduling and that is in the DCI. Specifically, when the cell 101 uses the DCI to indicate the TCI state of the cell 102, scrambles the DCI by using the C-RNTI, and has no data scheduling, some or all fields that are originally used for data scheduling and that are in the DCI may be modified to carry at least one of the preamble corresponding to the cell 102, the mask index corresponding to the cell 102, or the SSB index corresponding to the cell 102. The preamble may occupy 6 bits, the mask index may occupy 4 bits, and the SSB index may occupy 6 bits.

Optionally, the DCI may further include identification information of the cell 102. The identification information of the cell 102 may include at least one of a cell ID or a physical cell ID. The identification information of the cell 102 may be used for determining that the preamble, the mask index, or the SSB index carried in the DCI is the preamble, the mask index, or the SSB index corresponding to the cell 102. For example, after receiving the DCI, the terminal device parses the DCI to obtain the identification information of the cell 102. The terminal device may determine, based on the identification information of the cell 102, that the preamble, the mask index, or the SSB index carried in the reserved field or the field used for data scheduling in the DCI is the preamble, the mask index, or the SSB index corresponding to the cell 102.

In a possible implementation, the DCI may further include third information, the third information indicates a reference signal, for example, an SSB or a CRS-RS, and the reference signal is used for determining a path loss between the terminal device and the cell 102. For example, the cell 101 may use N bits to indicate the reference signal. The N bits may be bits in the DCI other than the RV, the MCS, the NDI, and the FDRA. For example, bits occupied by the following information are used to carry the third information: virtual resource block to physical resource block mapping (virtual resource block to physical resource block mapping), a physical resource block bundling size indicator (physical resource block bundling size indicator), a rate matching indicator (rate matching indicator), zero power CSI-RS trigger (zero power CSI-RS trigger), a PDSCH group index (PDSCH group index), a downlink data indicator (downlink assignment index), an antenna port (antenna port), an uplink sounding signal request (sounding reference signal request), code block group transmission information (code block group transmission information, CBGTI), code block group flushing out information (CBG flushing out information, CBGFI), a channel access-extended cyclic prefix (channel access-extended cyclic prefix) indicator, a minimum scheduling offset indicator (minimum applicable scheduling offset indicator), or the like. N is an integer greater than or equal to 1, for example, N is equal to 6.

Optionally, when the third information indicates the SSB, the terminal device may determine the path loss between the terminal device and the cell 102 based on an SSB in the TCI state indicated by the TCI state index. When the third information indicates the CRS-RS, the terminal device may determine, based on the identification information of the cell 102, whether the CRS-RS is a CRS-RS of the cell 102. When determining that the CRS-RS is the CRS-RS of the cell 102, the terminal device may determine the path loss between the terminal device and the cell 102 based on the CRS-RS.

S504: The cell 101 sends the DCI to the terminal device, and correspondingly, the terminal device receives the DCI from the cell 101.

S505: The terminal device determines a random access resource based on the second information.

The random access resource may include a time domain resource, a frequency domain resource, an RO, and the like. The random access resource is used for carrying a random access request message sent by the terminal device to the cell 102. Specifically, after receiving the DCI, the terminal device parses the DCI to obtain the second information. The terminal device may determine that the second information is information related to the cell 102. For example, the terminal device determines, based on the identification information of the cell 102, that the second information is information related to the cell 102, or determines, based on a fact that the TCI state indicated by the TCI state index is the TCI state of the cell 102, that the second information is information related to the cell 102. Further, the terminal device may initiate a random access process with the cell 102 based on the second information and the random access resource.

In an example, when the second information includes the preamble, the mask index, and the SSB index, after determining that the preamble is the preamble corresponding to the cell 102, the mask index is the mask index corresponding to the cell 102, and the SSB index is the SSB index corresponding to the cell 102, the terminal device may determine, based on the preamble, a time domain resource carrying the random access request message, determine, based on the mask index, a frequency domain resource carrying the random access request message, and determine an RO based on the SSB indicated by the SSB index.

In another example, when the second information includes a part of the preamble, the mask index, and the SSB index, the terminal device may determine the random access resource based on the TCI state of the cell 102, the second information, and a first correspondence.

For example, when the second information includes the preamble and the mask index, the terminal device may determine the SSB index based on the TCI state of the cell 102 and the first correspondence, and determine the random access resource based on the preamble, the mask index, and the SSB index. The first correspondence includes a correspondence between the TCI state of the cell 102 and the SSB index. Similarly, when the second information includes the preamble and the SSB index, the terminal device may determine the mask index based on the TCI state of the cell 102 and the first correspondence, and determine the random access resource based on the preamble, the mask index, and the SSB index. The first correspondence includes a correspondence between the TCI state of the cell 102 and the mask index. When the second information includes the mask index and the SSB index, the terminal device may determine the preamble based on the TCI state of the cell 102 and the first correspondence, and determine the random access resource based on the preamble, the mask index, and the SSB index. The first correspondence includes a correspondence between the TCI state of the cell 102 and the preamble.

For another example, when the second information includes the preamble, the terminal device may determine the mask index and the SSB index based on the TCI state of the cell 102 and the first correspondence, and determine the random access resource based on the preamble, the mask index, and the SSB index. The first correspondence includes a correspondence between the TCI state of the cell 102 and the mask index, and a correspondence between the TCI state of the cell 102 and the SSB index. Similarly, when the second information includes the mask index, the terminal device may determine the preamble and the SSB index based on the TCI state of the cell 102 and the first correspondence, and determine the random access resource based on the preamble, the mask index, and the SSB index. The first correspondence includes a correspondence between the TCI state of the cell 102 and the preamble, and a correspondence between the TCI state of the cell 102 and the SSB index. When the second information includes the SSB index, the terminal device may determine the preamble and the mask index based on the TCI state of the cell 102 and the first correspondence, and determine the random access resource based on the preamble, the mask index, and the SSB index. The first correspondence includes a correspondence between the TCI state of the cell 102 and the preamble, and a correspondence between the TCI state of the cell 102 and the mask index.

Optionally, the first correspondence may be predefined, preconfigured, or the like. For example, the cell 101 may send configuration information to the terminal device, and the configuration information includes the first correspondence.

S506: The terminal device sends a random access request message to the cell 102 based on the random access resource by using a beam indicated by the TCI state of the cell 102; and correspondingly, the cell 102 receives the random access request message.

After determining the random access resource, the terminal device may initiate a random access process between the terminal device and the cell 102. For example, the terminal device may determine an uplink beam based on a downlink beam corresponding to the TCI state indicated by the TCI state index, and then send the random access request message to the cell 102 by using the determined uplink beam and the random access resource. That the terminal device may determine an uplink beam based on a downlink beam corresponding to the TCI state indicated by the TCI state index may be understood as that the terminal device determines a spatial filter parameter for uplink sending by using a spatial filter (spatial filter) that is determined based on the reference signal (for example, an SSB) in the QCL-Type D information of the TCI state indicated by the TCI state index. It may be understood that, in step 506, the terminal device completes switching from a beam of the cell 101 to the beam of the cell 102, that is, L1/L2 beam switching.

In a possible implementation, the terminal device may further determine transmit power of the random access request message. Specifically, the terminal device may determine the path loss between the terminal device and the cell 102 based on transmit power preconfigured for the reference signal indicated by the third information and receive power obtained by the terminal device by measuring the reference signal, and determine the transmit power of the random access request message based on the path loss between the terminal device and the cell 102. Further, the terminal device may send the random access request message to the cell 102 based on the random access resource, the TCI state indicated by the TCI state index, and the transmit power of the random access request message. For the reference signal indicated by the third information, refer to related descriptions in step S503. Details are not described herein again.

In a possible implementation, the terminal device may send feedback information to the cell 101, and the feedback information may indicate whether the terminal device successfully receives the DCI, which is not shown in FIG. 5. The feedback information may be, for example, NACK information, indicating that the terminal device does not receive the DCI; or may be ACK information, indicating that the terminal device successfully receives the DCI. For example, the terminal device may send the feedback information to the cell 101 after the cell 101 sends the DCI to the terminal device and before the terminal device sends the random access request message to the cell 102 (that is, after S504 and before S506). In this embodiment, an example in which the terminal device successfully receives the DCI generated by the cell 101 is used.

Optionally, when the terminal device communicates with the cell 102 by using uplink timing information different from that for the cell 101, the random access request message may be further used to obtain the uplink timing information for communication between the terminal device and the cell 102. The uplink timing information includes at least one of an uplink timing advance or an uplink timing advance offset. For example, the cell 102 may send a random access response message to the terminal device. The random access response message includes the uplink timing information. That is, step S507 is performed.

S507: The cell 102 sends a random access response message to the terminal device, and correspondingly, the terminal device receives the random access response message.

The random access response message includes the uplink timing information. The uplink timing information includes at least one of the uplink timing advance or the uplink timing advance offset.

At this point, the terminal device successfully obtains the uplink timing information between the terminal device and the non-serving cell (that is, the cell 102). Then, the terminal device may send uplink information to the second device based on the uplink timing information.

In the foregoing embodiment, the TCI state index in the DCI delivered by the cell 101 indicates the TCI state of the cell 102, and the second information in the DCI may be used for determining the random access resource, to trigger a random access process between the terminal device and the cell 102, so that the terminal device is indicated, based on L1/L2 signaling, to communicate with the non-serving cell in a waveform of the non-serving cell. In addition, the terminal device can be triggered, based on the L1/L2 signaling, to initiate a random access process to the non-serving cell. Compared with random access initiated based on higher layer signaling (for example, L3 signaling), the random access initiated based on the L1/L2 signaling requires less signaling interaction, so that signaling overheads can be reduced and a random access delay can be shortened. Further, when communication between the terminal device and the non-serving cell requires uplink timing information different from that for the current camped cell, the terminal device may initiate a random access process to the non-serving cell to assist the non-serving cell in determining the uplink timing information between the terminal device and the non-serving cell, so that the terminal device can send uplink information to the non-serving cell based on the uplink timing information determined by the non-serving cell.

In the foregoing Embodiment 2, the cell 101 generates the DCI, and sends the DCI to the terminal device. In another possible implementation, the cell 101 may generate MAC-CE signaling, and send the MAC-CE signaling to the terminal device. The MAC-CE signaling may indicate one of the one or more activated TCI states, and may be used to trigger a random access procedure with the cell 102. For example, the cell 101 may generate the MAC-CE signaling based on the TCI state index and the second information. In this case, the MAC-CE signaling includes the TCI state index and the second information. A specific implementation process is similar to the implementation process in which the cell 101 generates the DCI. That is, the DCI in the foregoing steps S503 to S307 may be replaced with the MAC-CE signaling. Details are not described herein again.

In the foregoing Embodiment 2, the second network device is the cell 102. In another possible implementation, the second network device may be a TRP corresponding to the cell 101, or an antenna or a radio unit corresponding to the cell 101, or an RRU corresponding to the cell 101. When the second network device is the TRP corresponding to the cell 101 (or the antenna, the radio unit, or the RRU corresponding to the cell 101), the cell 101 generates DCI (or MAC-CE signaling), and sends the DCI (or the MAC-CE signaling) to the terminal device. After receiving the DCI (or the MAC-CE signaling), the terminal device does not perform cell handover, and may determine, based on the DCI (or the MAC-CE signaling), a timing advance for communication with the TRP corresponding to the cell 101 (or the antenna, the radio unit, or the RRU corresponding to the cell 101). The DCI (or the MAC-CE signaling) may not include the identification information of the cell 102, or the identification information of the cell 102 included in the DCI (or the MAC-CE signaling) is invalid.

### Embodiment 3

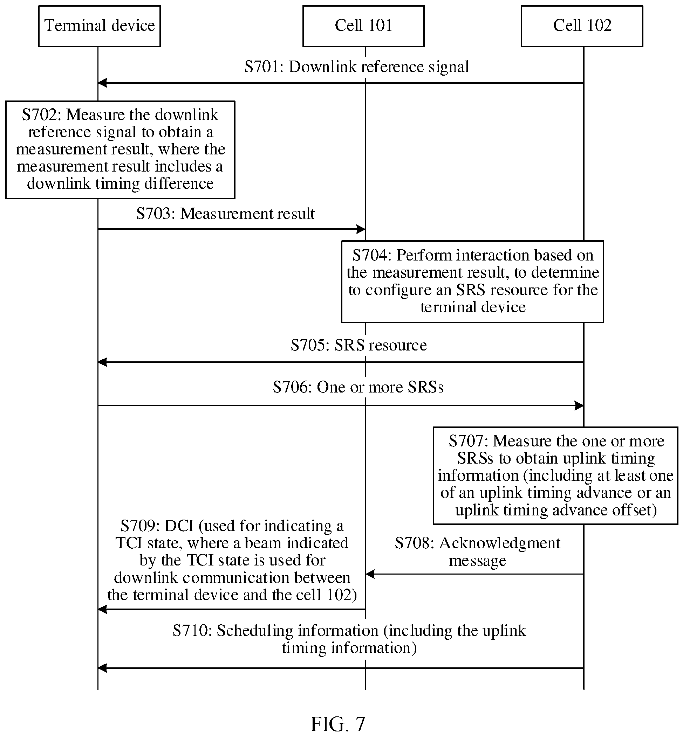

FIG. 7 is a schematic flowchart of a communication method according to an embodiment of this application. As shown in FIG. 7, in this embodiment, the communication method provided in this embodiment is described from a perspective that a terminal device does not need to perform cell handover.

S701: A cell 102 sends a downlink reference signal to the terminal device, and correspondingly, the terminal device receives the downlink reference signal.

The downlink reference signal may be an SSB, a CSI-RS, or the like. The cell 102 is a non-serving cell of the terminal device.

S702: The terminal device measures the downlink reference signal to obtain a measurement result. The measurement result includes a downlink timing difference between the terminal device and the cell 102.

S703: The terminal device sends the measurement result to a cell 101, and correspondingly, the cell 101 receives the measurement result.

The cell 101 is a cell on which the terminal device currently camps, that is, the cell 101 is a serving cell of the terminal device, and an RRC connection is established between the cell 101 and the terminal device. For example, after obtaining the measurement result, the terminal device may send the measurement result to the serving cell on which the terminal device camps. Optionally, the measurement result may include identification information of the cell 102.

S704: The cell 101 interacts with the cell 102 based on the measurement result, to determine to configure an SRS resource for the terminal device.

For example, the cell 101 may send the measurement result to the cell 102 based on the identification information of the cell 102. Correspondingly, the cell 102 determines, based on the measurement result, whether to configure an SRS resource for the terminal device. For example, the cell 102 may determine, by comparing the downlink timing difference obtained by the terminal device through measurement with a preset threshold, whether to configure the SRS resource for the terminal device. If a difference between the downlink timing difference obtained by the terminal device through measurement and the preset threshold is less than or equal to a preset value, the cell 102 determines not to configure the SRS resource for the terminal device; otherwise, the cell 102 determines to configure the SRS resource for the terminal device.

For another example, after receiving the measurement result, the cell 101 determines second indication information by comparing the downlink timing difference obtained by the terminal device through measurement with a preset threshold, and sends the second indication information to the cell 102. For example, if a difference between the downlink timing difference obtained by the terminal device through measurement and the preset threshold is less than or equal to a preset value, the second indication information indicates the cell 102 not to configure the SRS resource for the terminal device. Otherwise, the second indication information indicates the cell 102 to configure the SRS resource for the terminal device.

In FIG. 7, an example in which the cell 102 configures the SRS resource for the terminal device is used for description. That is, the cell 102 performs step S705.

S705: The cell 102 sends a sounding reference signal (sounding reference signal, SRS) resource to the cell 101, and correspondingly, the cell 101 receives the SRS resource.

S706: The terminal device sends one or more SRSs to the cell 102 based on the SRS resource. The cell 102 receives the one or more SRSs.

For example, the terminal device may send the one or more SRSs to the cell 102 based on the SRS resource and an uplink timing difference for communication between the terminal device and the camped cell (namely, the cell 102). Further, the terminal device may further determine transmit power of the one or more SRSs, and send the one or more SRSs to the cell 102 based on an uplink timing difference of the cell 101, the transmit power of the one or more SRSs, and the SRS resource. For example, the terminal device may determine a path loss between the terminal device and the cell 102 based on receive power and transmit power of the downlink reference signal, and determine the transmit power of the one or more SRSs based on the path loss.

S707: The cell 102 measures the one or more SRSs to obtain uplink timing information.

The uplink timing information includes at least one of an uplink timing advance or an uplink timing advance offset. For example, the second network measures the one or more SRSs from the terminal device, determines an uplink timing advance adjustment amount, and determines the uplink timing advance or the uplink timing advance offset between the terminal device and the cell 102 based on the uplink timing advance adjustment amount. The uplink timing advance adjustment amount may be at a granularity of a beam. That is, there is a correspondence between one uplink timing advance adjustment amount and a resource corresponding to one SRS. Alternatively, there is a correspondence between one uplink timing advance adjustment amount and a resource of one reference signal.

S708: The cell 102 sends an acknowledgment message to the cell 101, and correspondingly, the cell 101 receives the acknowledgment message.

The acknowledgment message indicates that the cell 102 has obtained the uplink timing advance or the uplink timing advance offset between the cell 102 and the terminal device. Optionally, the acknowledgment message may further indicate an optimal uplink beam of the terminal device, for example, by using an SRS resource indication. Optionally, the acknowledgment message may further indicate a downlink beam corresponding to the optimal uplink beam of the terminal device, for example, an SSB index or a CSI-RS resource identity is used as an uplink beam (uplink TCI state) indication of a reference source.

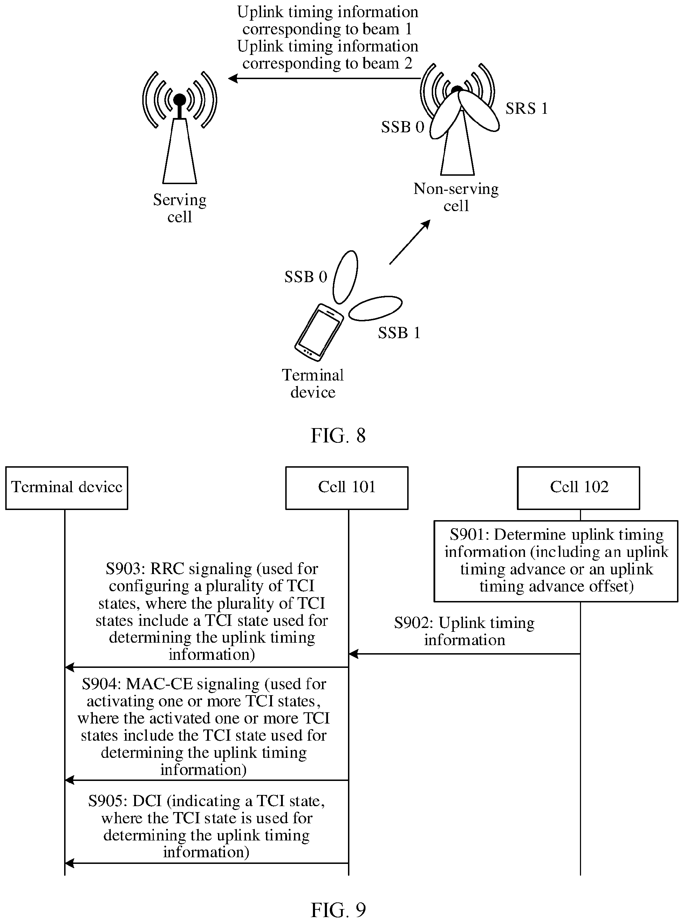

Optionally, the acknowledgment message further includes the uplink timing information. As shown in FIG. 8, the cell 102 may send uplink timing information corresponding to each beam to the cell 102. In FIG. 8, a beam 1 and a beam 2 are used as an example.

In a possible implementation, after specified duration after sending the one or more SRSs, the terminal device determines that the cell 102 has obtained the uplink timing advance or the uplink timing advance offset between the cell 102 and the terminal device.

S709: The cell 101 sends the DCI to the terminal device, and correspondingly, the terminal device receives the DCI.

The cell 101 may send the DCI to the terminal device based on the downlink beam corresponding to the optimal uplink beam of the terminal device that is determined by the cell 102, where the DCI indicates one of one or more activated TCI states. A beam indicated by the TCI state is the downlink beam corresponding to the optimal uplink beam of the terminal device.

It should be understood that before step S709, the cell 101 may send higher layer signaling to the terminal device, where the higher layer signaling is used for configuring a plurality of TCI states, and the plurality of TCI states include a TCI state of the cell 102; and send MAC-CE signaling to the terminal device, where the MAC-CE signaling is used for activating one or more TCI states, and the one or more activated TCI states include the TCI state of the cell 102. For a specific implementation process, refer to related descriptions in Embodiment 1. Details are not described herein again. FIG. 7 does not show a procedure in which the cell 101 sends the higher layer signaling and the MAC-CE signaling to the terminal device.

In a possible implementation, the terminal device may send feedback information to the cell 101, and the feedback information may indicate whether the terminal device successfully receives the DCI, which is not shown in FIG. 7. The feedback information may be, for example, NACK information, indicating that the terminal device does not receive the DCI; or may be ACK information, indicating that the terminal device successfully receives the DCI. For example, the terminal device may send the feedback information to the cell 101 after the cell 101 sends the DCI to the terminal device. In this embodiment, an example in which the terminal device successfully receives the DCI generated by the cell 101 is used.

In S709, the cell 101 sends the DCI to the terminal device. In another possible implementation, the cell 101 may send MAC-CE signaling to the terminal device, where the MAC-CE signaling may be used to indicate one of one or more activated TCI states, and a beam indicated by the TCI state is the downlink beam corresponding to the optimal uplink beam of the terminal device. In other words, the DCI in S709 may be replaced with the MAC-CE signaling. Details are not described herein again.

S710: The cell 102 sends scheduling information to the terminal device, and correspondingly, the terminal device receives the scheduling information.

The scheduling information includes the uplink timing information.

In a downlink direction, the terminal device may attempt to receive downlink information of the cell 102, for example, a PDCCH or a PDSCH, based on the downlink beam indicated by the TCI state.

In an uplink direction, the terminal device may send uplink information, for example, a PUCCH or a PUSCH, to the cell 102 based on the uplink timing information and an uplink beam determined based on the downlink beam indicated by the TCI state.

In the foregoing embodiment, the cell 102 may determine the uplink timing advance or the uplink timing advance offset based on the one or more SRSs sent by the terminal device, and cell handover does not need to be performed. That is, before L1/L2 handover, the terminal device may obtain the uplink timing advance or the uplink timing advance offset between the terminal device and the cell 102, so that a delay of a random access process can be saved, and the terminal device can communicate with the non-serving cell by using a beam of the non-serving cell.

### Embodiment 4

FIG. 9 is a schematic flowchart of a communication method according to an embodiment of this application. As shown in FIG. 9, in this embodiment, the communication method provided in this embodiment is described from a perspective that a terminal device does not need to perform cell handover.

S901: A cell 102 determines uplink timing information.

The uplink timing information includes at least one of an uplink timing advance or an uplink timing advance offset. The cell 102 is a non-serving cell of the terminal device. For example, the cell 102 may determine the uplink timing information between the cell 102 and the terminal device before the terminal device performs L1/L2 handover. For example, if a cell 101 and the cell 102 are deployed at a same location, the cell 102 may directly use uplink timing information of the cell 101 and the terminal device for communicate with the terminal device. It should be noted that a specific implementation of determining the uplink timing information by the cell 102 is not limited in this embodiment of this application.

S902: The cell 102 sends the uplink timing information to the cell 101, and correspondingly, the cell 101 receives the uplink timing information.

The cell 101 is a cell on which the terminal device currently camps, that is, a serving cell of the terminal device. For example, after determining the uplink timing information, the cell 102 may send the uplink timing information to the serving cell of the terminal device.

S903: The cell 101 sends RRC signaling to the terminal device, and correspondingly, the terminal device receives the RRC signaling.

The RRC signaling is used for configuring a plurality of TCI states, and the plurality of TCI states include a TCI state used for determining the uplink timing information. The TCI state used for determining the uplink timing information may be understood as that the TCI state includes the uplink timing information. For example, the cell 101 uses a reserved field of the TCI state to carry the uplink timing information. Alternatively, it may be understood as that there is a correspondence between the TCI state and the uplink timing information. For example, the cell 101 may associate an identifier of the TCI state with the uplink timing information. The uplink timing information is the uplink timing information between the terminal device and the cell 102, that is, the uplink timing information determined by the cell 102 in step S901.

S904: The cell 101 sends MAC-CE signaling to the terminal device, and correspondingly, the terminal device receives the MAC-CE signaling.

The MAC-CE signaling is used for activating one or more of the plurality of TCI states. The one or more activated TCI states include the TCI state used for determining the uplink timing information.

S905: The cell 101 sends DCI to the terminal device, and correspondingly, the terminal device receives the DCI.

The DCI indicates one of the one or more activated TCI states. The TCI state indicated by the DCI may be used for determining the uplink timing information for communication between the terminal device and the cell 102.

In a possible implementation, the terminal device may send feedback information to the cell 101, and the feedback information may indicate whether the terminal device successfully receives the DCI, which is not shown in FIG. 9. The feedback information may be, for example, NACK information, indicating that the terminal device does not receive the DCI; or may be ACK information, indicating that the terminal device successfully receives the DCI. For example, the terminal device may send the feedback information to the cell 101 after the cell 101 sends the DCI to the terminal device. In this embodiment, an example in which the terminal device successfully receives the DCI generated by the cell 101 is used.

In S905, the cell 101 sends the DCI to the terminal device. In another possible implementation, the cell 101 may send MAC-CE signaling to the terminal device. The MAC-CE signaling may indicate one of the one or more activated TCI states. The TCI state indicated by the DCI may be used for determining the uplink timing information for communication between the terminal device and the cell 102. In other words, the DCI in S905 may be replaced with the MAC-CE signaling.

At this point, the terminal device successfully obtains the uplink timing information of the non-serving cell. Then, the terminal device may send uplink information, such as a PUCCH or a PUSCH, to the cell 102 based on the uplink timing information.

In the foregoing embodiment, the uplink timing information is determined by the non-serving cell, and the non-serving cell sends the uplink timing information to the serving cell of the terminal device. In this way, the serving cell may send the uplink timing information to the terminal device by using a TCI configuration, without changing a TCI configuration procedure or performing cell handover. That is, before L1/L2 handover, the terminal device may obtain the uplink timing information between the terminal device and the cell 102, so that a delay of a random access process can be saved, and the terminal device can communicate with the non-serving cell by using a beam of the non-serving cell.

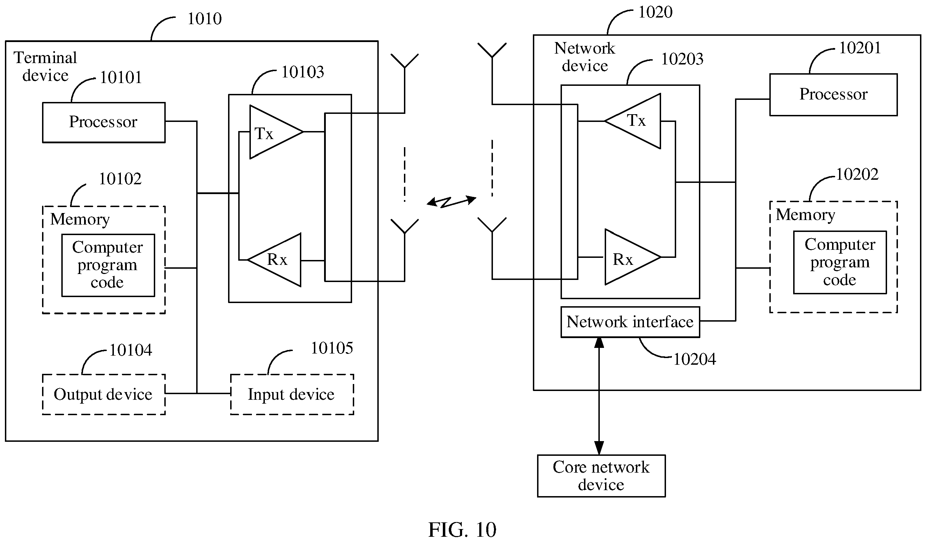

Based on the same technical concept as the foregoing communication method, an embodiment of this application further provides a communication system. Optionally, as shown in FIG. 10, FIG. 10 is a schematic diagram of a structure of a terminal device 1010 and a network device 1020 according to an embodiment of this application. The network device 1020 may be a first network device or a second network device, or may be located in the first network device or the second network device. FIG. 10 does not show a schematic diagram of a structure between the first network device and the second network device.

The terminal device 1010 includes at least one processor (an example in which one processor 10101 is included is used for description in FIG. 10) and at least one transceiver (an example in which one transceiver 10103 is included is used for description in FIG. 10). Optionally, the terminal device 1010 may further include at least one memory (an example in which one memory 10102 is included is used for description in FIG. 10), at least one output device (an example in which one output device 10104 is included is used for description in FIG. 10), and at least one input device (an example in which one input device 10105 is included is used for description in FIG. 10).

The processor 10101, the memory 10102, and the transceiver 10103 are connected through a communication line. The communication line may include a path for transmitting information between the foregoing components.

The processor 10101 may be a general-purpose central processing unit (central processing unit, CPU), a microprocessor, an application-specific integrated circuit (application-specific integrated circuit, ASIC), one or more integrated circuits configured to control program execution of the solutions in this application, a general-purpose processor, a digital signal processor (digital signal processor, DSP), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by means of a hardware decoding processor, or may be executed and accomplished by using a combination of hardware and software modules in the decoding processor. The software module may be in a storage medium, and the storage medium is located in the memory 10102.

The memory 10102 may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type. The memory may exist independently, and is connected to the processor through a communication line. The memory may alternatively be integrated with the processor.

The memory 10102 is configured to store computer-executable instructions for executing the solutions of this application, and the processor 10101 controls execution. The processor 10101 is configured to execute the computer-executable instructions stored in the memory 10102, to implement the communication method provided in the following embodiments of this application.

Optionally, the computer-executable instructions in this embodiment of this application may also be referred to as application program code or computer program code. This is not specifically limited in this embodiment of this application.

The output device 10104 communicates with the processor 10101, and may display information in a plurality of manners. For example, the output device 10104 may be a liquid crystal display (liquid crystal display, LCD), a light emitting diode (light emitting diode, LED) display device, a cathode ray tube (cathode ray tube, CRT) display device, or a projector (projector). The input device 10105 communicates with the processor 10101, and may receive an input of a user in a plurality of manners. For example, the input device 10105 may be a mouse, a keyboard, a touchscreen device, or a sensor device.

The transceiver 10103 may use any transceiver-type apparatus, and is configured to communicate with another device or a communication network such as the Ethernet, a radio access network (radio access network, RAN), or a wireless local area network (wireless local area networks, WLAN). The transceiver 10103 includes a transmitter (transmitter, Tx) and a receiver (receiver, Rx).

The memory 10102 may exist independently, and is connected to the processor 10101 through a communication line. The memory 10102 may be alternatively integrated with the processor 10101.

The memory 10102 is configured to store computer-executable instructions for executing the solutions of this application, and the processor 10101 controls execution. Specifically, the processor 10101 is configured to execute the computer-executable instructions stored in the memory 10102, to implement the communication method in the embodiments of this application.

Alternatively, optionally, in this embodiment of this application, the processor 10101 may perform processing-related functions in the signal generation method provided in the following embodiments of this application, and the transceiver 10103 is responsible for communicating with another device or a communication network. This is not specifically limited in this embodiment of this application.

The network device 1020 includes at least one processor (an example in which one processor 10201 is included is used for description in FIG. 10), at least one transceiver (an example in which one transceiver 10203 is included is used for description in FIG. 10), and at least one network interface (an example in which one network interface 10204 is included is used for description in FIG. 10). Optionally, the network device 1020 may further include at least one memory (an example in which one memory 10202 is included is used for description in FIG. 10). The processor 10201, the memory 10202, the transceiver 10203, and the network interface 10204 are connected through a communication line. The network interface 10204 is configured to connect to a core network device through a link (such as an S1 interface), or connect to a network interface of another network device through a wired or wireless link (such as an X2 interface) (not shown in FIG. 10). This is not specifically limited in this embodiment of this application. In addition, for related descriptions of the processor 10201, the memory 10202, and the transceiver 10203, refer to the descriptions of the processor 10101, the memory 10102, and the transceiver 10103 in the terminal device 1010. Details are not described herein again.

It may be understood that the structure shown in FIG. 10 does not constitute a specific limitation on the terminal device 1010 and the network device 1020. For example, in some other embodiments of this application, the terminal device 1010 or the network device 1020 may include more or fewer components than those shown in the figure, or some components may be combined, or some components may be split, or the components are arranged in different manners. The components shown in the figure may be implemented by hardware, software, or a combination of software and hardware.

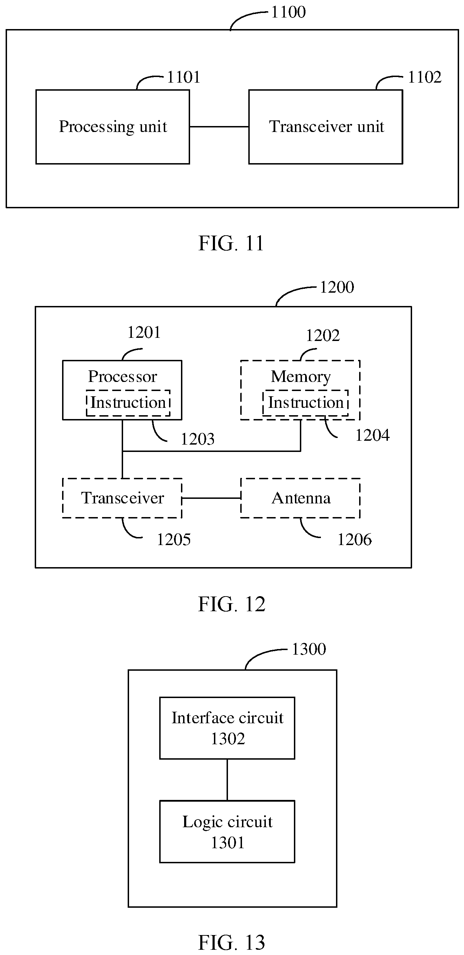

Based on the same technical concept as the foregoing communication method, an embodiment of this application further provides a communication apparatus. As shown in FIG. 11, the communication apparatus 1100 includes a processing unit 1101 and a transceiver unit 1102. The communication apparatus 1100 may be configured to implement the method described in the foregoing method embodiment. The communication apparatus 1100 may be applied to a terminal device or located in a terminal device. Alternatively, the communication apparatus 1100 may be applied to a first network device or located in a first network device. Alternatively, the communication apparatus 1100 may be applied to a second network device or located in a second network device.

In a possible implementation, the communication apparatus 1100 may be a terminal device.

The processing unit 1101 may be configured to perform content shown in the foregoing steps S305, S306, S505, S702, and the like.

The transceiver unit 1102 may be configured to indicate content shown in the foregoing steps S301 and S302, S304, S307 and S308, S501 and S502, S504, S506 and S507, S701, S703, S705 and S706, S709 and S710, S903 to S905, and the like.

In another possible implementation, the communication apparatus 1100 may be the first network device.

The processing unit 1101 may be configured to perform content shown in the foregoing steps S303, S503, S704, and the like.

The transceiver unit 1102 may be configured to indicate content shown in the foregoing steps S301 and S302, S304, S501 and S502, S504, S703, S704, S708 and S709, S902, and the like.

In another possible implementation, the communication apparatus 1100 may be the second network device.

The processing unit 1101 may be configured to perform content shown in the foregoing steps S704, S707, S901, and the like.

The transceiver unit 1102 may be configured to indicate content shown in the foregoing steps S307 and S308, S506 and S507, S701, S705 and S706, S708, S710, S902, and the like.

It should be noted that, for a specific implementation process of the foregoing steps, refer to the foregoing corresponding descriptions, and details are not described herein again.

It should be noted that in embodiments of this application, division into modules is an example, and is only a logical function division. During actual implementation, there may be another division manner. In addition, functional units in embodiments of this application may be integrated into one processing unit, or may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the integrated unit may be stored in a storage medium as a computer software product, and includes instructions for enabling a computer device (which may be a personal computer, a server, or a network device) or a processor (processor) to perform all or some of the steps of the methods in the embodiments of this application.

As shown in FIG. 12, an embodiment of this application further provides a schematic diagram of a structure of a communication apparatus 1200. The apparatus 1200 may be configured to implement the method described in the foregoing method embodiment. For details, refer to the descriptions in the foregoing method embodiment.

The apparatus 1200 includes one or more processors 1201. The processor 1201 may be a general-purpose processor, a dedicated processor, or the like, For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) signals. For example, the transceiver unit may be a transceiver or a radio frequency chip.

The apparatus 1200 includes one or more processors 1201, and the one or more processors 1201 can implement the method in the foregoing embodiment.

Optionally, the processor 1201 may further implement another function in addition to the method in the foregoing embodiment.

Optionally, in a design, the processor 1201 may execute instructions, to enable the apparatus 1200 to perform the method described in the foregoing method embodiment. All or some of the instructions, for example, an instruction 1203, may be stored in the processor; or all or some of the instructions, for example, an instruction 1204, may be stored in the memory 1202 coupled to the processor; or the apparatus 1200 may be enabled to perform the method described in the foregoing method embodiment by using both the instructions 1203 and 1204. The instruction 1203 is also referred to as a computer program.

In another possible design, the communication apparatus 1200 may include a circuit, and the circuit can implement functions in the foregoing method embodiment.

In another possible design, the apparatus 1200 may include one or more memories 1202, and the one or more memories 1202 store an instruction 1204. The instruction may be run on the processor, to enable the apparatus 1200 to perform the method described in the foregoing method embodiment. Optionally, the memory may further store data. Optionally, the processor may also store instructions and/or data. For example, the one or more memories 1202 may store the correspondence described in the foregoing embodiments, or the related parameter, table, or the like in the foregoing embodiments. The processor and the memory may be separately disposed, or may be integrated with each other.

In another possible design, the apparatus 1200 may further include a transceiver 1205 and an antenna 1206. The processor 1201 may be referred to as a processing unit, and controls the apparatus (a terminal or a base station). The transceiver 1205 may be referred to as a transceiver machine, a transceiver circuit, a transceiver unit, or the like, and is configured to implement a transceiver function of the apparatus by using the antenna 1206.

An embodiment of this application further provides a computer-readable medium. The computer-readable medium stores a computer program. When the computer program is executed by a computer, the communication method in any one of the foregoing method embodiments is implemented.

An embodiment of this application further provides a computer program product, including a computer program. When the computer program is executed by a computer, the communication method in any one of the foregoing method embodiments is implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are entirely or partially generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

In a possible design, when the communication apparatus is a chip, for example, a chip in a network device, or a chip in a terminal device, the determining unit or the processor 1201 may be one or more logic circuits, and the sending unit or the receiving unit or the transceiver 1205 may be an input/output interface, or may be referred to as a communication interface, an interface circuit, an interface, or the like. Alternatively, the transceiver 1205 may alternatively be a sending unit and a receiving unit, the sending unit may be an output interface, the receiving unit may be an input interface, and the sending unit and the receiving unit are integrated into one unit such as an input/output interface. As shown in FIG. 13, a communication apparatus 1300 shown in FIG. 13 includes a logic circuit 1301 and an interface circuit 1302. That is, the determining unit or the processor 1201 may be implemented by using the logic circuit 1301, and the sending unit or the receiving unit or the transceiver 1205 may be implemented by using the interface circuit 1302. The logic circuit 1301 may be a chip, a processing circuit, an integrated circuit, a system on chip (system on chip, SoC) chip, or the like. The interface circuit 1302 may be a communication interface, an input/output interface, or the like. In this embodiment of this application, the logic circuit and the interface circuit may be coupled to each other. A specific connection manner of the logic circuit and the interface circuit is not limited in this embodiment of this application.

In some embodiments of this application, the logic circuit and the interface circuit may be configured to perform functions, operations, or the like performed by the network device or the terminal device.

For the functions or operations performed by the network device or the terminal device, refer to the foregoing method embodiments. Details are not described herein again.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer.

In conclusion, the foregoing descriptions are merely embodiments of the technical solutions of this application, but are not intended to limit the protection scope of this application. Any modification, equivalent replacement, improvement, or the like made without departing from the principle of this application shall fall within the protection scope of this application.

## Claims

1. A communication method, comprising:
receiving, by a terminal device, downlink control information DCI from a first network device, wherein the DCI comprises first information, a preamble, a mask index, a synchronization signal block SSB index, and a transmission configuration indicator TCI state index, and there is a correspondence between the first information and a transmission configuration indicator TCI state of a second network device;
determining, by the terminal device based on the first information, that a TCI state indicated by the TCI state index is the TCI state of the second network device;
determining, by the terminal device, a random access resource based on the preamble, the mask index, and the SSB index; and
sending, by the terminal device, a random access request message to the second network device based on the random access resource and the TCI state indicated by the TCI state index.

2. The method according to claim 1, wherein the first information comprises at least one of identification information of the second network device or a first preset value, and there is a correspondence between the first preset value and the TCI state of the second network device.

3. The method according to claim 1 or 2, wherein a value of the preamble is a second preset value, and the method further comprises:
updating, by the terminal device, the value of the preamble from the second preset value to a third preset value based on the fact that the TCI state indicated by the TCI state index is the TCI state of the second network device, wherein there is a correspondence between the third preset value and the TCI state of the second network device.

4. The method according to any one of claims 1 to 3, wherein the method further comprises:
receiving, by the terminal device, first configuration information from the first network device, wherein the first configuration information comprises the correspondence between the first preset value and the TCI state of the second network device and the correspondence between the third preset value and the TCI state of the second network device.

5. A communication method, comprising:
receiving, by a terminal device, downlink control information DCI from a first network device, wherein the DCI comprises a preamble, a mask index, a synchronization signal block SSB index, and a transmission configuration indicator TCI state index, and values of the preamble and the mask index indicate that an SSB indicated by the SSB index is an SSB of a second network device;
determining, by the terminal device based on the fact that the SSB indicated by the SSB index is the SSB of the second network device, that a TCI state indicated by the TCI state index is a TCI state of the second network device, wherein there is a correspondence between the SSB of the second network device and the TCI state of the second network device;
determining, by the terminal device, a random access resource based on the preamble, the mask index, and the SSB index; and
sending, by the terminal device, a random access request message to the second network device based on the random access resource and the TCI state indicated by the TCI state index.

6. The method according to claim 5, wherein the value of the preamble is a second preset value, and the method further comprises:
updating, by the terminal device, the value of the preamble from the second preset value to a third preset value based on the fact that the TCI state indicated by the TCI state index is the TCI state of the second network device, wherein there is a correspondence between the third preset value and the TCI state of the second network device.

7. The method according to claim 5 or 6, wherein the method further comprises:
receiving, by the terminal device, second configuration information from the first network device, wherein the second configuration information comprises the correspondence between the SSB of the second network device and the TCI state of the second network device and the correspondence between the third preset value and the TCI state of the second network device.

8. The method according to any one of claims 5 to 7, wherein there is an association relationship between a reference signal comprised in QCL-Type D information in the TCI state indicated by the TCI state index and identification information of the second network device.

9. The method according to any one of claims 1 to 8, wherein the method further comprises:
determining, by the terminal device, a path loss between the terminal device and the second network device based on transmit power of a reference signal and receive power of the reference signal, wherein the reference signal is a reference signal in the TCI state of the second network device or the SSB indicated by the SSB index; and
determining, by the terminal device, transmit power of the random access request message based on the path loss between the terminal device and the second network device; wherein
the sending, by the terminal device, a random access request message to the second network device based on the random access resource and the TCI state indicated by the TCI state index comprises:
sending, by the terminal device, the random access request message to the second network device at the transmit power based on the random access resource and the TCI state indicated by the TCI state index.

10. A communication method, comprising:
receiving, by a terminal device, downlink control information DCI from a first network device, wherein the DCI comprises a transmission configuration indicator TCI state index and second information, the TCI state index indicates a TCI state of a second network device, and the second information comprises at least one of a preamble, a mask index, or a synchronization signal block SSB index;
determining, by the terminal device, a random access resource based on the second information; and
sending, by the terminal device, a random access request message to the second network device based on the random access resource and the TCI state of the second network device.

11. The method according to claim 10, wherein the determining, by the terminal device, a random access resource based on the second information comprises:
determining, by the terminal device, the random access resource based on the TCI state of the second network device, a first correspondence, and the second information; wherein
when the second information comprises the preamble, the first correspondence comprises a correspondence between the mask index and the TCI state of the second network device, and a correspondence between the SSB index and the TCI state of the second network device;
when the second information comprises the mask index, the first correspondence comprises a correspondence between the preamble and the TCI state of the second network device, and a correspondence between the SSB index and the TCI state of the second network device;
when the second information comprises the SSB index, the first correspondence comprises a correspondence between the preamble and the TCI state of the second network device, and a correspondence between the mask index and the TCI state of the second network device;
when the second information comprises the preamble and the mask index, the first correspondence comprises a correspondence between the SSB index and the TCI state of the second network device;
when the second information comprises the preamble and the SSB index, the first correspondence comprises a correspondence between the mask index and the TCI state of the second network device; or
when the second information comprises the mask index and the SSB index, the first correspondence comprises a correspondence between the preamble and the TCI state of the second network device.

12. The method according to claim 11, wherein the method further comprises:
receiving, by the terminal device, third configuration information from the first network device, wherein the third configuration information comprises the first correspondence.

13. The method according to any one of claims 10 to 12, wherein when the DCI is scrambled by a cell-radio network temporary identifier of the terminal device, the second information is carried in a field that is in the DCI and that is used to carry data scheduling.

14. The method according to any one of claims 10 to 13, wherein the DCI further comprises third information, the third information indicates a reference signal, and the method further comprises:
determining, by the terminal device, a path loss between the terminal device and the second network device based on transmit power of the reference signal and receive power of the reference signal; and
determining, by the terminal device, transmit power of the random access request message based on the path loss between the terminal device and the second network device; wherein
the sending, by the terminal device, a random access request message to the second network device based on the random access resource and the TCI state of the second network device comprises:
sending, by the terminal device, the random access request message to the second network device at the transmit power based on the random access resource and the TCI state of the second network device.

15. The method according to any one of claims 1 to 14, wherein the method further comprises:
receiving, by the terminal device, a random access response message from the second network device, wherein the random access response message comprises an uplink timing advance, and the uplink timing advance is used by the terminal device to send uplink information to the second network device.

16. The method according to any one of claims 1 to 15, wherein the method further comprises:
receiving, by the terminal device, higher layer signaling from the first network device, wherein the higher layer signaling is used for configuring a plurality of TCI states, and the plurality of TCI states comprise the TCI state of the second network device.

17. The method according to claim 16, wherein the method further comprises:
receiving, by the terminal device, Media Access Control control element MAC-CE signaling from the first network device, wherein the MAC-CE signaling is used for activating one or more of the plurality of TCI states, and the one or more activated TCI states comprise the TCI state of the second network device.

18. A communication method, comprising:
receiving, by a terminal device, a first message from a first network device, wherein the first message comprises handover indication information and identification information of a second network device, and the handover indication information is used to indicate the terminal device to perform cell handover; and
handing over, by the terminal device, from the first network device to the second network device based on the first message.

19. The method according to claim 18, wherein the first message further comprises timing indication information and a transmission configuration indicator TCI state index, the timing indication information indicates a timing used when the terminal device communicates with the second network device, and a TCI state indicated by the TCI state index is a TCI state of the second network device; and
the handing over, by the terminal device, from the first network device to the second network device based on the first message comprises:
performing, by the terminal device, beam switching based on the TCI state indicated by the TCI state index, and communicating with the second network device based on the timing indicated by the timing indication information.

20. The method according to claim 18, wherein the first message further comprises a transmission configuration indicator TCI state index and second information, and the second information comprises at least one of a preamble, a mask index, or a synchronization signal block SSB index; and
the handing over, by the terminal device, from the first network device to the second network device based on the first message comprises:
determining, by the terminal device, a random access resource based on the handover indication information and the second information; and
sending, by the terminal device, a random access request message to the second network device based on the random access resource and a TCI state indicated by the TCI state index.

21. The method according to claim 18, wherein the first message further comprises a transmission configuration indicator TCI state index, and a TCI state indicated by the TCI state index is a TCI state of the second network device; and
the handing over, by the terminal device, from the first network device to the second network device based on the first message comprises:
determining, by the terminal device, a random access resource based on the handover indication information and preset configuration information, wherein the preset configuration information comprises at least one of a preamble, a mask index, or a synchronization signal block SSB index; and
sending, by the terminal device, a random access request message to the second network device based on the random access resource and the TCI state indicated by the TCI state index.

22. A communication method, comprising:
receiving, by a terminal device, a first message from a first network device, wherein the first message comprises timing indication information, a transmission configuration indicator TCI state index, and identification information of a second network device, and the timing indication information indicates a timing used when the terminal device communicates with the second network device; and
performing, by the terminal device, beam switching based on a TCI state indicated by the TCI state index, and communicating with the second network device based on the timing indicated by the timing indication information.

23. A communication method, comprising:
generating, by a first network device, downlink control information DCI, wherein the DCI comprises first information, a preamble, a mask index, a synchronization signal block SSB index, and a transmission configuration indicator TCI state index, and there is a correspondence between the first information and a transmission configuration indicator TCI state of a second network device; and
sending, by the first network device, the DCI to a terminal device.

24. The method according to claim 23, wherein the method further comprises:
sending, by the first network device, first configuration information to the terminal device, wherein the first configuration information comprises a correspondence between the first preset value and the TCI state of the second network device, and a correspondence between a third preset value and the TCI state of the second network device, and the third preset value is used to update the preamble.

25. A communication method, comprising:
generating, by a first network device, downlink control information DCI, wherein the DCI comprises a preamble, a mask index, a synchronization signal block SSB index, and a transmission configuration indicator TCI state index, and values of the preamble and the mask index indicate that an SSB indicated by the SSB index is an SSB of a second network device; and
sending, by the first network device, the DCI to a terminal device.

26. The method according to claim 25, wherein the method further comprises:
sending, by the first network device, second configuration information to the terminal device, wherein the second configuration information comprises a correspondence between the SSB of the second network device and a TCI state of the second network device, and a correspondence between a third preset value and the TCI state of the second network device, and the third preset value is used to update the preamble.

27. The method according to claim 25 or 26, wherein there is an association relationship between a reference signal comprised in QCL-Type D information in a TCI state indicated by the TCI state index and identification information of the second network device.

28. A communication method, comprising:
generating, by a first network device, downlink control information DCI, wherein the DCI comprises a transmission configuration indicator TCI state index and second information, the TCI state index indicates a TCI state of a second network device, and the second information comprises at least one of a preamble, a mask index, or a synchronization signal block SSB index; and
sending, by the first network device, the DCI to a terminal device.

29. The method according to claim 28, wherein the method further comprises:
sending, by the first network device, third configuration information to the terminal device, wherein the third configuration information comprises a first correspondence; wherein
when the second information comprises the preamble, the first correspondence comprises a correspondence between the mask index and the TCI state of the second network device, and a correspondence between the SSB index and the TCI state of the second network device;
when the second information comprises the mask index, the first correspondence comprises a correspondence between the preamble and the TCI state of the second network device, and a correspondence between the SSB index and the TCI state of the second network device;
when the second information comprises the SSB index, the first correspondence comprises a correspondence between the preamble and the TCI state of the second network device, and a correspondence between the mask index and the TCI state of the second network device;
when the second information comprises the preamble and the mask index, the first correspondence comprises a correspondence between the SSB index and the TCI state of the second network device;
when the second information comprises the preamble and the SSB index, the first correspondence comprises a correspondence between the mask index and the TCI state of the second network device; or
when the second information comprises the mask index and the SSB index, the first correspondence comprises a correspondence between the preamble and the TCI state of the second network device.

30. The method according to any one of claims 23 to 29, wherein the method further comprises:
sending, by the first network device, higher layer signaling to the terminal device, wherein the higher layer signaling is used for configuring a plurality of TCI states, and the plurality of TCI states comprise the TCI state of the second network device.

31. The method according to claim 30, wherein the method further comprises:
sending, by the first network device, Media Access Control control element MAC-CE signaling to the terminal device, wherein the MAC-CE signaling is used for activating one or more of the plurality of TCI states, and the one or more activated TCI states comprise the TCI state of the second network device.

32. A communication method, comprising:
generating, by a first network device, a first message, wherein the first message comprises handover indication information and identification information of a second network device, and the handover indication information is used to indicate a terminal device to perform cell handover; and
sending, by the first network device, the first message to the terminal device.

33. The method according to claim 32, wherein the first message further comprises timing indication information and a transmission configuration indicator TCI state index, the timing indication information indicates a timing used when the terminal device communicates with the second network device, and a TCI state indicated by the TCI state index is a TCI state of the second network device.

34. The method according to claim 32, wherein the first message further comprises a transmission configuration indicator TCI state index and second information, and the second information comprises at least one of a preamble, a mask index, or a synchronization signal block SSB index.

35. The method according to claim 32, wherein the first message further comprises a transmission configuration indicator TCI state index, and a TCI state indicated by the TCI state index is a TCI state of the second network device.

36. A communication method, comprising:
generating, by a first network device, a first message, wherein the first message comprises timing indication information, a transmission configuration indicator TCI state index, and identification information of a second network device, and the timing indication information indicates a timing used when a terminal device communicates with the second network device; and
sending, by the first network device, the first message to the terminal device.

37. A communication apparatus, wherein the apparatus comprises a processing unit and a transceiver unit;
the transceiver unit is configured to receive downlink control information DCI from a first network device, wherein the DCI comprises first information, a preamble, a mask index, a synchronization signal block SSB index, and a transmission configuration indicator TCI state index, and there is a correspondence between the first information and a transmission configuration indicator TCI state of a second network device;
the processing unit is configured to: determine, based on the first information, that a TCI state indicated by the TCI state index is the TCI state of the second network device; and determine a random access resource based on the preamble, the mask index, and the SSB index; and
the transceiver unit is further configured to send a random access request message to the second network device based on the random access resource and the TCI state indicated by the TCI state index.

38. The apparatus according to claim 37, wherein the first information comprises at least one of identification information of the second network device or a first preset value, and there is a correspondence between the first preset value and the TCI state of the second network device.

39. The apparatus according to claim 37 or 38, wherein a value of the preamble is a second preset value, and the processing unit is further configured to:
update the value of the preamble from the second preset value to a third preset value based on the fact that the TCI state indicated by the TCI state index is the TCI state of the second network device, wherein there is a correspondence between the third preset value and the TCI state of the second network device.

40. The apparatus according to any one of claims 37 to 39, wherein the transceiver unit is further configured to:
receive first configuration information from the first network device, wherein the first configuration information comprises the correspondence between the first preset value and the TCI state of the second network device and the correspondence between the third preset value and the TCI state of the second network device.

41. A communication apparatus, wherein the apparatus comprises a processing unit and a transceiver unit;
the transceiver unit is configured to receive downlink control information DCI from a first network device, wherein the DCI comprises a preamble, a mask index, a synchronization signal block SSB index, and a transmission configuration indicator TCI state index, and values of the preamble and the mask index indicate that an SSB indicated by the SSB index is an SSB of a second network device;
the processing unit is configured to: determine, based on the fact that the SSB indicated by the SSB index is the SSB of the second network device, that a TCI state indicated by the TCI state index is a TCI state of the second network device, wherein there is a correspondence between the SSB of the second network device and the TCI state of the second network device; and determine a random access resource based on the preamble, the mask index, and the SSB index; and
the transceiver unit is further configured to send a random access request message to the second network device based on the random access resource and the TCI state indicated by the TCI state index.

42. The apparatus according to claim 41, wherein the value of the preamble is a second preset value, and the processing unit is further configured to:
update the value of the preamble from the second preset value to a third preset value based on the fact that the TCI state indicated by the TCI state index is the TCI state of the second network device, wherein there is a correspondence between the third preset value and the TCI state of the second network device.

43. The apparatus according to claim 41 or 42, wherein the transceiver unit is further configured to:
receive second configuration information from the first network device, wherein the second configuration information comprises the correspondence between the SSB of the second network device and the TCI state of the second network device and the correspondence between the third preset value and the TCI state of the second network device.

44. The apparatus according to any one of claims 41 to 43, wherein there is an association relationship between a reference signal comprised in QCL-Type D information in the TCI state indicated by the TCI state index and identification information of the second network device.

45. The apparatus according to any one of claims 37 to 44, wherein the processing unit is further configured to:
determine a path loss between the communication apparatus and the second network device based on transmit power of a reference signal and receive power of the reference signal, wherein the reference signal is a reference signal in the TCI state of the second network device or the SSB indicated by the SSB index; and determine transmit power of the random access request message based on the path loss between the communication apparatus and the second network device; and
when sending the random access request message to the second network device based on the random access resource and the TCI state indicated by the TCI state index, the transceiver unit is specifically configured to:
send the random access request message to the second network device at the transmit power based on the random access resource and the TCI state indicated by the TCI state index.

46. A communication apparatus, wherein the apparatus comprises a processing unit and a transceiver unit;
the transceiver unit is configured to receive downlink control information DCI from a first network device, wherein the DCI comprises a transmission configuration indicator TCI state index and second information, the TCI state index indicates a TCI state of a second network device, and the second information comprises at least one of a preamble, a mask index, or a synchronization signal block SSB index;
the processing unit is configured to determine a random access resource based on the second information; and
the transceiver unit is further configured to send a random access request message to the second network device based on the random access resource and the TCI state of the second network device.

47. The apparatus according to claim 46, wherein when determining the random access resource based on the second information, the processing unit is specifically configured to:
determine the random access resource based on the TCI state of the second network device, a first correspondence, and the second information; wherein
when the second information comprises the preamble, the first correspondence comprises a correspondence between the mask index and the TCI state of the second network device, and a correspondence between the SSB index and the TCI state of the second network device;
when the second information comprises the mask index, the first correspondence comprises a correspondence between the preamble and the TCI state of the second network device, and a correspondence between the SSB index and the TCI state of the second network device;
when the second information comprises the SSB index, the first correspondence comprises a correspondence between the preamble and the TCI state of the second network device, and a correspondence between the mask index and the TCI state of the second network device;
when the second information comprises the preamble and the mask index, the first correspondence comprises a correspondence between the SSB index and the TCI state of the second network device;
when the second information comprises the preamble and the SSB index, the first correspondence comprises a correspondence between the mask index and the TCI state of the second network device; or
when the second information comprises the mask index and the SSB index, the first correspondence comprises a correspondence between the preamble and the TCI state of the second network device.

48. The apparatus according to claim 47, wherein the transceiver unit is further configured to:
receive third configuration information from the first network device, wherein the third configuration information comprises the first correspondence.

49. The apparatus according to any one of claims 46 to 48, wherein when the DCI is scrambled by a cell-radio network temporary identifier of the communication apparatus, the second information is carried in a field that is in the DCI and that is used to carry data scheduling.

50. The apparatus according to any one of claims 46 to 49, wherein the DCI further comprises third information, the third information indicates a reference signal, and the processing unit is further configured to:
determine a path loss between the communication apparatus and the second network device based on transmit power of the reference signal and receive power of the reference signal; and determine transmit power of the random access request message based on the path loss between the communication apparatus and the second network device; and
when sending the random access request message to the second network device based on the random access resource and the TCI state of the second network device, the transceiver unit is specifically configured to:
send the random access request message to the second network device at the transmit power based on the random access resource and the TCI state of the second network device.

51. The apparatus according to any one of claims 37 to 50, wherein the transceiver unit is further configured to:
receive a random access response message from the second network device, wherein the random access response message comprises an uplink timing advance, and the uplink timing advance is used by the communication apparatus to send uplink information to the second network device.

52. The apparatus according to any one of claims 37 to 51, wherein the transceiver unit is further configured to:
receive higher layer signaling from the first network device, wherein the higher layer signaling is used for configuring a plurality of TCI states, and the plurality of TCI states comprise the TCI state of the second network device.

53. The apparatus according to claim 52, wherein the transceiver unit is further configured to:
receive Media Access Control control element MAC-CE signaling from the first network device, wherein the MAC-CE signaling is used for activating one or more of the plurality of TCI states, and the one or more activated TCI states comprise the TCI state of the second network device.

54. A communication apparatus, wherein the apparatus comprises a processing unit and a transceiver unit;
the transceiver unit is configured to receive a first message from a first network device, wherein the first message comprises handover indication information and identification information of a second network device, and the handover indication information is used to indicate the communication apparatus to perform cell handover; and
the processing unit is configured to hand over from the first network device to the second network device based on the first message.

55. The apparatus according to claim 54, wherein the first message further comprises timing indication information and a transmission configuration indicator TCI state index, the timing indication information indicates a timing used when the communication apparatus communicates with the second network device, and a TCI state indicated by the TCI state index is a TCI state of the second network device; and
when handing over from the first network device to the second network device based on the first message, the processing unit is specifically configured to:
perform beam switching based on the TCI state indicated by the TCI state index, and communicate with the second network device based on the timing indicated by the timing indication information.

56. The apparatus according to claim 54, wherein the first message further comprises a transmission configuration indicator TCI state index and second information, and the second information comprises at least one of a preamble, a mask index, or a synchronization signal block SSB index;
when handing over from the first network device to the second network device based on the first message, the processing unit is specifically configured to:
determine a random access resource based on the handover indication information and the second information; and
the transceiver unit is specifically configured to send the random access request message to the second network device based on the random access resource and a TCI state indicated by the TCI state index.

57. The apparatus according to claim 54, wherein the first message further comprises a transmission configuration indicator TCI state index, and a TCI state indicated by the TCI state index is a TCI state of the second network device;
when handing over from the first network device to the second network device based on the first message, the processing unit is specifically configured to:
determine a random access resource based on the handover indication information and preset configuration information, wherein the preset configuration information comprises at least one of a preamble, a mask index, or a synchronization signal block SSB index; and
the transceiver unit is specifically configured to send the random access request message to the second network device based on the random access resource and the TCI state indicated by the TCI state index.

58. A communication apparatus, wherein the apparatus comprises a processing unit and a transceiver unit;
the transceiver unit is configured to receive a first message from a first network device, wherein the first message comprises timing indication information, a transmission configuration indicator TCI state index, and identification information of a second network device, and the timing indication information indicates a timing used when the communication apparatus communicates with the second network device; and
the processing unit is configured to: perform beam switching based on a TCI state indicated by the TCI state index, and communicate with the second network device based on the timing indicated by the timing indication information.

59. A communication apparatus, wherein the apparatus comprises a processing unit and a transceiver unit;
the processing unit is configured to generate downlink control information DCI, wherein the DCI comprises first information, a preamble, a mask index, a synchronization signal block SSB index, and a transmission configuration indicator TCI state index, and there is a correspondence between the first information and a transmission configuration indicator TCI state of a second network device; and
the transceiver unit is configured to send the DCI to a terminal device.

60. The apparatus according to claim 59, wherein the transceiver unit is further configured to:
send first configuration information to the terminal device, wherein the first configuration information comprises a correspondence between the first preset value and the TCI state of the second network device, and a correspondence between a third preset value and the TCI state of the second network device, and the third preset value is used to update the preamble.

61. A communication apparatus, wherein the apparatus comprises a processing unit and a transceiver unit;
the processing unit is configured to generate downlink control information DCI, wherein the DCI comprises a preamble, a mask index, a synchronization signal block SSB index, and a transmission configuration indicator TCI state index, and values of the preamble and the mask index indicate that an SSB indicated by the SSB index is an SSB of a second network device; and
the transceiver unit is configured to send the DCI to a terminal device.

62. The apparatus according to claim 61, wherein the transceiver unit is further configured to:
send second configuration information to the terminal device, wherein the second configuration information comprises a correspondence between the SSB of the second network device and a TCI state of the second network device, and a correspondence between a third preset value and the TCI state of the second network device, and the third preset value is used to update the preamble.

63. The apparatus according to claim 61 or 62, wherein there is an association relationship between a reference signal comprised in QCL-Type D information in a TCI state indicated by the TCI state index and identification information of the second network device.

64. A communication apparatus, wherein the apparatus comprises a processing unit and a transceiver unit;
the processing unit is configured to generate downlink control information DCI, wherein the DCI comprises a transmission configuration indicator TCI state index and second information, the TCI state index indicates a TCI state of a second network device, and the second information comprises at least one of a preamble, a mask index, or a synchronization signal block SSB index; and
the transceiver unit is configured to send the DCI to a terminal device.

65. The apparatus according to claim 64, wherein the transceiver unit is further configured to:
send third configuration information to the terminal device, wherein the third configuration information comprises a first correspondence; wherein
when the second information comprises the preamble, the first correspondence comprises a correspondence between the mask index and the TCI state of the second network device, and a correspondence between the SSB index and the TCI state of the second network device;
when the second information comprises the mask index, the first correspondence comprises a correspondence between the preamble and the TCI state of the second network device, and a correspondence between the SSB index and the TCI state of the second network device;
when the second information comprises the SSB index, the first correspondence comprises a correspondence between the preamble and the TCI state of the second network device, and a correspondence between the mask index and the TCI state of the second network device;
when the second information comprises the preamble and the mask index, the first correspondence comprises a correspondence between the SSB index and the TCI state of the second network device;
when the second information comprises the preamble and the SSB index, the first correspondence comprises a correspondence between the mask index and the TCI state of the second network device; or
when the second information comprises the mask index and the SSB index, the first correspondence comprises a correspondence between the preamble and the TCI state of the second network device.

66. The apparatus according to any one of claims 59 to 65, wherein the transceiver unit is further configured to:
send higher layer signaling to the terminal device, wherein the higher layer signaling is used for configuring a plurality of TCI states, and the plurality of TCI states comprise the TCI state of the second network device.

67. The apparatus according to claim 66, wherein the transceiver unit is further configured to:
send Media Access Control control element MAC-CE signaling to the terminal device, wherein the MAC-CE signaling is used for activating one or more of the plurality of TCI states, and the one or more activated TCI states comprise the TCI state of the second network device.

68. A communication apparatus, wherein the communication apparatus comprises a processing unit and a transceiver unit;
the processing unit is configured to generate a first message, wherein the first message comprises handover indication information and identification information of a second network device, and the handover indication information is used to indicate a terminal device to perform cell handover; and
the first network device sends the first message to the terminal device.

69. The apparatus according to claim 68, wherein the first message further comprises timing indication information and a transmission configuration indicator TCI state index, the timing indication information indicates a timing used when the terminal device communicates with the second network device, and a TCI state indicated by the TCI state index is a TCI state of the second network device.

70. The apparatus according to claim 68, wherein the first message further comprises a transmission configuration indicator TCI state index and second information, and the second information comprises at least one of a preamble, a mask index, or a synchronization signal block SSB index.

71. The apparatus according to claim 68, wherein the first message further comprises a transmission configuration indicator TCI state index, and a TCI state indicated by the TCI state index is a TCI state of the second network device.

72. A communication apparatus, wherein the communication apparatus comprises a processing unit and a transceiver unit;
the processing unit is configured to generate a first message, wherein the first message comprises timing indication information, a transmission configuration indicator TCI state index, and identification information of a second network device, and the timing indication information indicates a timing used when a terminal device communicates with the second network device; and
the transceiver unit is configured to send the first message to the terminal device.

73. A communication apparatus, comprising a memory and one or more processors, wherein the memory is coupled to the one or more processors; and
the memory is configured to store a computer program or instructions, and when the computer program or the instructions are executed by the one or more processors, the communication apparatus is enabled to perform the method according to any one of claims 1 to 22, or the communication apparatus is enabled to perform the method according to any one of claims 23 to 36.

74. A computer-readable storage medium, wherein the computer-readable storage medium stores instructions, and when the instructions are run on a computer, the computer is enabled to perform the method according to any one of claims 1 to 22, or the computer is enabled to perform the method according to any one of claims 23 to 36.
